**Europäisches Patentamt**

(19) **European Patent Office**

**Office européen des brevets**

(11) Veröffentlichungsnummer: **0 106 022**
**B1**

(12) **EUROPÄISCHE PATENTSCHRIFT**

(45) Veröffentlichungstag der Patentschrift:
**08.10.86**

(51) Int. Cl.⁴: **H 02 M 5/27**

(21) Anmeldenummer: **83106295.5**

(22) Anmeldetag: **28.06.83**

(54) Verfahren und Vorrichtung zum Ermitteln der Ausgangs-Grundschwingung eines Stellgliedes und Anwendung zur Steuerung eines in ein Versorgungsnetz einspeisenden Stellgliedes.

(30) Priorität: 29.06.82 DE 3224222
29.06.82 DE 3224238
29.06.82 DE 3224320
30.09.82 DE 3236318

(43) Veröffentlichungstag der Anmeldung:
**25.04.84 Patentblatt 84/17**

(45) Bekanntmachung des Hinweises auf die Patenterteilung:
**08.10.86 Patentblatt 86/41**

(84) Benannte Vertragsstaaten:
**AT CH DE LI SE**

(56) Entgegenhaltungen:
**EP - A - 0 034 808**

(73) Patentinhaber: **Siemens Aktiengesellschaft Berlin und München, Wittelsbacherplatz 2, D-8000 München 2 (DE)**

(72) Erfinder: **Neupauer, Helmut, Dr., Heiligenlohstrasse 3, D-8520 Erlangen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Verfahren und eine Vorrichtung zum Ermitteln der Grundschwingung am Ausgang eines Stellgliedes, das durch eine Führungsgrösse mit vorgegebener Sollfrequenz gesteuert ist. Dabei kann es auch wünschenswert sein, anstelle der Grundschwingung selbst ein Messwertsignal zu ermitteln, das durch ein vorgegebenes Amplitudenverhältnis und eine vorgegebene Phasendifferenz unmittelbar der Grundschwingung entspricht und der Grundschwingung somit gleichwertig ist.

Ferner betrifft die Erfindung Anwendungen des Verfahrens, durch die besonders das Einspeisen in ein elektrisches Versorgungsnetz mittels des Stellgliedes erleichtert wird und/oder bei einem Direktumrichter mit Drehstromausgang, insbesondere zur Einspeisung in eine unsymmetrische Last, das stromflussabhängige Umschalten der Drehstrombrücken des Umrichters vorgenommen wird.

Im Hinblick auf die Erfindung werden bereits jetzt einige Begriffe zur Beschreibung von Wechselgrössen, insbesondere Drehstromnetzen, und ihr Zusammenhang mit Begriffen und Rechenbausteinen der Vektorrechnung erläutert.

Zwei Wechselgrössen konstanter Frequenz $\omega$ beschreiben ein symmetrisches System, wenn sie durch

$$i'_\alpha = i' \cos (\omega t + \varphi')$$

$$i'_\beta = i' \sin (\omega t + \varphi')$$

mit einer gemeinsamen Amplitude $i'$ und einer gemeinsamen Phasenlage $\varphi'$ dargestellt werden können. Dabei können $i'_\alpha$, $i'_\beta$ als kartesische Komponenten oder $i'$, $\omega t + \varphi'$ als Polarkomponenten eines Vektors ( $\underline{i'}$ ) in einem orthogonalen, raumfesten Bezugssystem (Koordinaten $\alpha$, $\beta$) aufgefasst werden. Man kann sie auch mittels eines, von einem Winkelsignal $\psi = \omega t$ (oder einem entsprechenden Winkelsignal-Paar $\cos\psi$, $\sin\psi$) beaufschlagten «Vektordrehers» in ein mit der Frequenz $\omega$ und einem als positiv festgelegtem Drehsinn rotierendes Koordinatensystem («Koordinaten-Mitsystem», Koordinaten $\alpha'$, $\beta'$) transformieren und erhält dann die demodulierten Messwerte

$$i'_{\alpha'} = \cos\varphi'$$

$$i'_{\beta'} = \sin\varphi'$$

als Komponenten eines im Koordinaten-Mitsystem ruhenden «Mitsystem-Vektors» $\underline{i'}$.

Ein unsymmetrisches System enthält aber mehr Freiheitsgrade und kann in die allgemeine Form

$$i_\alpha \cos(\omega t + \varphi_\alpha) = i'\cos (\omega t + \varphi') + i''\cos (\omega t + \omega'')$$

$$i_\beta \cos(\omega t + \varphi_\alpha) = i'\sin (-\omega t + \varphi') + i''\sin (-\omega t + \varphi'')$$

gebracht werden, das eine Überlagerung mit einem zweiten symmetrischen System darstellt.

Das zweite System seinerseits kann als ruhender Vektor $\underline{i''}$ – Betrag $i''$, Richtung $\varphi''$ bzw. kartesische Komponenten $i''_{\alpha''}$, $i''_{\beta''}$ in einem mit entgegengesetzten Drehsinn rotierenden Bezugssystem («Koordinaten-Gegensystem», Koordinaten $\alpha''$, $\beta''$) – aufgefasst werden, der zur Beschreibung des Gegensystems dient.

Ein System von drei Messwerten $i_1$, $i_2$, $i_3$, z. B. die Ausgangsströme eines Drehstrom-Umrichters, können als Überlagerung eines Nullsystems $i_0 = i_1 + i_2 + i_3$ und eines durch zwei Komponenten $i_\alpha$, $i_\beta$ – z.B. entsprechend der zeitunabhängigen algebraischen Zuordnung

$$i_\alpha = i_1 - i_0/3$$

$$i_\beta = (-i_1 - i_0/3 + 2 \cdot (i_2 - i_0/3))/\sqrt{3} -$$

festgelegten Vektors $\underline{i}$ beschrieben werden.

Die Zerlegung eines Vektors $\underline{i}$ in Mitsystem-Vektor $\underline{i'}$ und Gegensystem-Vektor $\underline{i''}$ kann auch auf einen einzelnen skalaren Messwert, z.B. $i_0$, angewendet werden, indem eine zweite Vektorkomponente (z.B. $i_\beta = i_0$), vorgegeben wird. Der Gegensystem-Vektor ist dann nur das Spiegelbild des Mitsystem-Vektors.

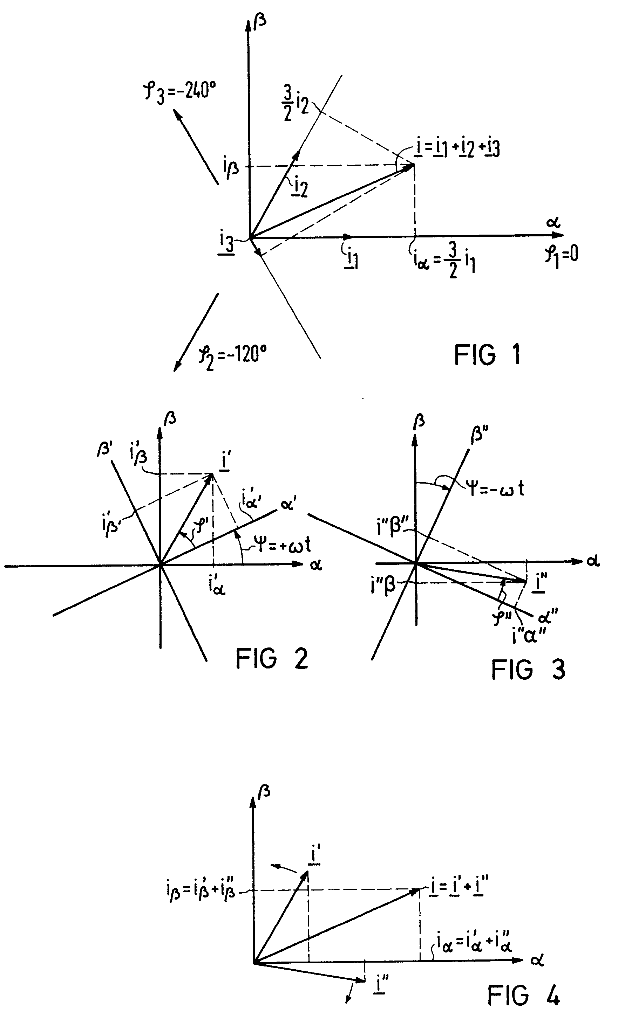

Zur Verdeutlichung der Begriffe ist in Fig. 1 ein Messwertsystem $i_1$, $i_2$, $i_3$ mit $i_1 + i_2 + i_3 = 0$ («nullkomponentenfrei») dargestellt, aus denen durch Zuordnung der Richtungen $\varphi_1 = 0$, $\varphi_2 = -120°$, $\varphi_3 = -240°$ die Vektoren $\underline{i_1}$, $\underline{i_2}$, $\underline{i_3}$ bzw. die Vektorsumme $\underline{i_1} + \underline{i_2} + \underline{i_3} = \underline{i}$ mit den kartesischen raumfesten Komponenten $i_\alpha$, $i_\beta$ gemäss der algebraischen Zuordnung gebildet sind.

Fig. 2 zeigt den Mitsystem-Vektor $\underline{i'}$ in den Koordinaten $\alpha$, $\beta$ bzw. $\alpha'$, $\beta'$. Der Gegensystem-Vektor $\underline{i''}$ (der in Fig. 3 dargestellt ist), stellt im Koordinaten-Mitsystem $\alpha'$, $\beta'$ einen mit der Frequenz $-2\omega$ rotierenden Vektor dar. Fig. 4 zeigt die Überlagerung der beiden symmetrischen Systemvektoren $\underline{i'}$, $\underline{i''}$ zum Vektor $\underline{i}$.

Der allgemeinste Fall liegt vor, wenn jeder Messwert eine Überlagerung verschiedener Frequenzen enthält. Die Erfindung befasst sich damit, aus derartigen Überlagerungen von Frequenzen für die Ausgangsgrössen eines Stellgliedes die Grundschwingung herauszufinden, wobei davon Gebrauch gemacht wird, dass die Grundfrequenz in der Regel durch die für die Führungsgrössen der Stellgliedsteuerung vorgegebene Sollfrequenz bestimmt ist. Dies soll am bevorzugten Anwendungsfall, dass das Stellglied ein Umrichter mit Drehstromausgang ist, erläutert werden.

Die Erfindung ist insbesondere vorteilhaft bei einer Regelanordnung für einen Drehstrom-Drehstrom-Direktumrichter zur Speisung einer unsymmetrischen Last. Bei hohen Leistungen bewirkt eine unsymmetrische Last eine unerträgliche Rückwirkung auf das speisende Drehstromnetz, weshalb der Last eine elektronische Symmetriereinrichtung zum Erzeugen eines symmetrischen Systems von Umrichter-Ausgangsströmen parallelgeschaltet ist. Eine Regeleinrichtung bildet aus einer Führungsgrösse mit vorgegebener Sollfrequenz und aus Messwerten für die Ströme und/ oder Spannungen an den Umrichterausgängen Stellgrössen zum Erzeugen eines symmetrischen Systems von Umrichter-Ausgangsspannungen. Ferner erfordert ein derartiger Direktumrichter eine Umschalteinrichtung, die jeweils die auf einen Umrichterausgang arbeitenden antiparallelen Gleichrichterbrücken beim Nulldurchgang der Stromgrundschwingung umschaltet. Hierzu ist der Umschalteinrichtung ein aus Strommesswerten an den Umrichterausgängen abgeleitetes Umsteuersignal zugeführt.

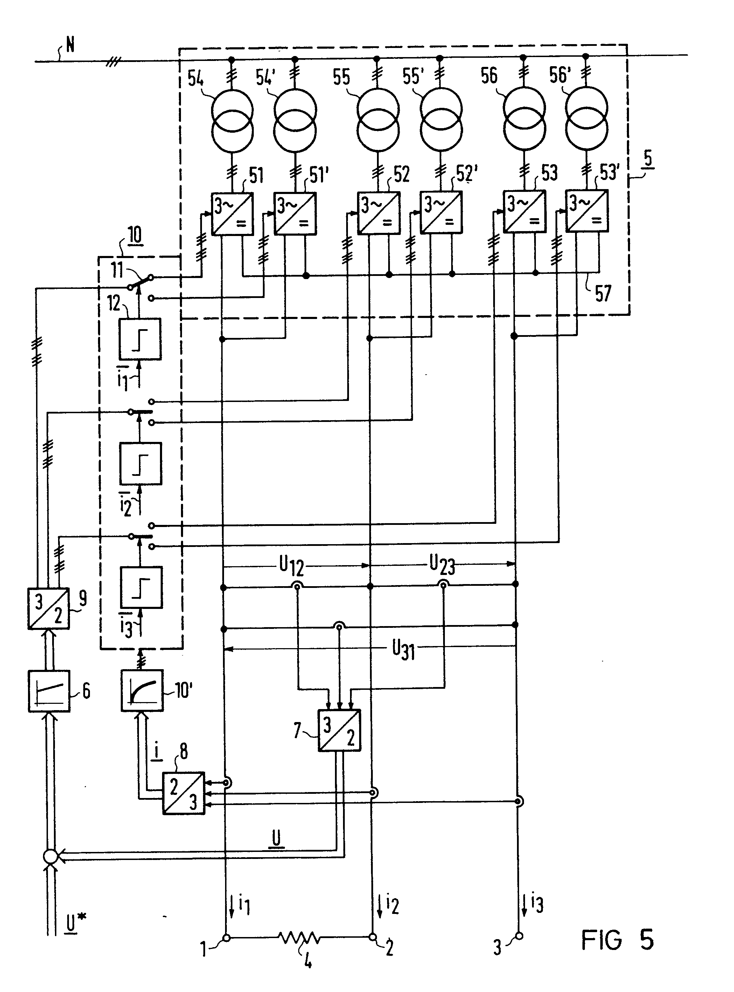

In Fig. 5 ist ein derartiger Drehstrom-Drehstrom-Direktumrichter mit einer derartigen, im wesentlichen bekannten Regelanordnung dargestellt. Von den drei Drehstromausgängen 1, 2, 3 sind nur zwei Ausgänge 1, 2 des Direktumrichters 5 an eine Last 4 angeschlossen. Dabei ist jedem Drehstromausgang eine an das Drehstromnetz N angeschlossene Gleichrichterbrücke 51, 52, 53 zugeordnet, deren anderer Ausgang zu einem Sternpunkt 57 geführt ist, so dass durch eine entsprechende Zündung der Gleichrichterventile geeignete zeitliche Abschnitte der verketteten Spannungen des Netzes herausgeschnitten und an der Ausgangsseite zu einer Halbwelle niedrigerer Frequenz zusammengesetzt werden können. Da die auf die jeweiligen Ausgänge 1, 2, 3 arbeitenden Gleichrichterbrücken 51, 52, 53 jeweils nur in einer Richtung Strom führen können, ist jeder dieser Gleichrichterbrücken eine weitere Gleichrichterbrücke 51', 52', 53' zur Erzeugung der anderen Halbwelle antiparallel geschaltet. Die Ankoppelung der Brückenschaltungen an das Versorgungsnetz N geschieht über entsprechende Stromrichtertransformatoren 54, 54',...56'.

Der hier dargestellte Direktumrichter wird geregelt betrieben, indem einer Regeleinheit 6 Sollwerte für seine Ausgangsspannung zugeführt werden, z.B. ein durch die beiden Komponenten $U^*$ cos $\omega^* t$, $U^*$ sin $\omega^* t$ beschriebener Spannungssollvektor $\underline{U}^*$, der mit einem entsprechenden Istspannungsvektor $\underline{U}$ verglichen ist, der von einem $^3/_2$-Koordinatenwandler 7 aus den entsprechenden, mittels zwischen den Ausgängen 1, 2 und 3 angeordneten Messwandlern erfassten Messspannungen $U_{12}$, $U_{23}$, $U_{31}$ gebildet wird. Ein gleichartiger Koordinatenwandler 8 kann auch für die drei Ausgangsströme $i_1$, $i_2$, $i_3$ vorgesehen sein, um z.B. eine Stromeinprägung anstelle der Spannungseinprägung durchzuführen.

Da ein Vektor stets zwei Bestimmungsgrössen (z.B. seine kartesischen oder polaren Koordinaten) besitzt, stellt jedes vektorielle Signal ein Signalpaar dar, das über eine Signal-Doppelleitung (in den Figuren durch Doppelpfeile dargestellt) übertragen wird. Entsprechend ist das für die Regeleinheit 6 vorgesehene Regelvergleichsglied zur komponentenweisen Subtraktion des Istvektors $\underline{U}$ vom Sollvektor $\underline{U}^*$ ausgebildet, sie enthält also zwei Subtraktionsstellen, deren Ausgangssignale den Differenzvektor darstellen und der ebenfalls aus zwei Einzelreglern aufgebauten Regeleinheit 6 zugeführt sind. Deren Ausgangssignale stellen einen Steuervektor dar, der über einen $^2/_3$-Koordinatenwandler 9 in entsprechende Stellgrössen (Steuerspannungen) und über (nicht dargestellte) Steuersätze in Zündbefehle für die jeweiligen Umkehrumrichter des Direktumrichters umgewandelt werden kann.

Dadurch wird dem Direktumrichter die Ausgangsspannung eingeprägt. Ebenso kann aber auch der Ausgangsstrom eingeprägt werden. Der entsprechende Sollvektor, im Beispiel also der Sollspannungsvektor $\underline{U}^*$, kann zur Erzeugung eines symmetrischen Ausgangssystems als ein mit der gewünschten Ausgangsfrequenz $f^*$ umlaufender Vektor konstanten Betrages vorgegeben werden. Im Einzelfall ist es häufig vorteilhafter, zuerst die Umwandlung des kartesisch vorgegebenen Sollvektors in drei Sollwerte $U^*_{12}$, $U^*_{23}$, $U^*_{31}$ vorzunehmen und diese Sollwerte dann mit den entsprechenden Istwerten zu vergleichen und jeweils einer eigenen, dem auf den entsprechenden Ausgang arbeitenden Umkehrstromrichter zugeordnete Regeleinrichtung aufzuschalten.

Eine Kommandostufe 10 sorgt als Umschalteinrichtung dafür, dass die Steuerspannung bzw. die Zündimpulse für die einzelnen Umkehrumrichter nur auf diejenige der beiden antiparallelen Brückenschaltungen des entsprechenden Umkehrrichters gegeben werden, deren Stromführungsrichtung der Polarität der Grundschwingung des Ausgangsstromes entspricht. Die andere Brückenschaltung bleibt dabei gesperrt. Hier entsteht das Problem, die Umschaltzeitpunkte aus dem Verlauf des Umrichterstromes so zu bestimmen, dass sie mit den Nulldurchgängen der Stromgrundschwingung bzw. eines entsprechenden Umsteuersignals zusammenfallen.

In Fig. 5 ist dies dadurch schematisch dargestellt, dass der Kommandostufe 10 die mittels eines Filters 10' aus dem Iststromvektor $\underline{i}$ ermittelten Umsteuersignale $\overline{i_1}$, $\overline{i_2}$, $\overline{i_3}$ vorgegeben werden, deren Nulldurchgänge mittels Grenzwertmeldern 12 festgestellt werden, um damit entsprechende Umschalter 11 zu steuern.

Das mit der Erfindung z.B. lösbare Problem liegt dabei darin, dass z.B. die Stromgrundfrequenz an sich zwar durch übliche Filter ermittelt werden kann, wobei aber die Schwingung selbst eine lastabhängige Phasenverschiebung erleidet. Die Stromgrundschwingung soll daher durch eine Schaltung ermittelt werden, die entweder überhaupt keine Dynamikglieder enthält oder solche Glieder an einer Stelle verwendet, wo sie nicht zu einer Phasenverschiebung führen.

Wird für die Steuer- oder Regeleinrichtung der auf einen Ausgang arbeitenden Brücken ein entsprechender Sollwert für den Ausgangsstrom (Laststrom) vorgegeben, so entspricht nur im Idealfall die Laststrom-Grundschwingung dem Sollstrom. In der Praxis führt aber jede ungenaue Einstellung des Umschaltzeitpunktes zu einer Verzerrung des Iststromes gegenüber der durch die Sollwerte vorgegebenen Kurvenform und damit zu einer Iststrom-Grundschwingung, deren Nulldurchgänge noch mehr von den Nulldurchgängen der Stromsollkurve abweichen. Ein Ausfiltern der in den Strommesswerten enthaltenen Grundschwingung ist jedoch nicht direkt möglich, da die Filter aufgrund ihrer dynamischen Eigenschaften eine lastabhängige Phasenverschiebung des Kurvenverlaufes bewirken und somit Phase und Amplitude der Grundschwingung nicht korrekt wiedergeben.

Wird dagegen die Ausgangsspannung des Direktumrichters durch entsprechende Sollwerte vorgegeben (Spannungseinprägung), so stellt sich der Strom von selbst mit einer Phasenlage gegenüber der vorgegebenen Ausgangsspannung ein, die bei veränderlicher Last ebenfalls veränderlich ist, so dass aus dem Sollspannungsverlauf noch weniger auf die Nulldurchgänge der Iststrom-Grundschwingung geschlossen werden kann.

Der Erfindung liegt daher die Aufgabe zugrunde, aus einem Messwert für den Ausgangsstrom des Stellgliedes die im Messwert enthaltene Grundschwingung zu ermitteln. Diese Aufgabe tritt insbesondere dann auf, wenn ein Drehstrom-Drehstrom-Direktumrichter eine unsymmetrische Last speist, z.B. einen nur zwischen zwei Drehstromausgängen angeschlossenen Wechselstromverbraucher. Das liegt besonders dann vor, wenn ein 16⅔-Hz-Einphasen-Bahnnetz aus einem öffentlichen 50 Hz-Drehstromnetz gespeist werden soll. In diesem Fall sind die Phasenlagen der Ausgangsströme in den einzelnen Strängen unterschiedlich und veränderlich. Die Erfindung lässt sich dabei unabhängig davon anwenden, ob die Ausgangsspannung oder der Ausgangsstrom des Umrichters durch entsprechende Führungsgrössen eingeprägt ist.

Wird allgemein ein Stellglied für eine Drehspannung benutzt, um über einen Ankoppeltransformator in ein Drehstrom-Versorgungsnetz einzuspeisen, so muss häufig die Ausgangsspannung in Abhängigkeit von Phase und Amplitude der Netzspannung so geregelt werden, dass über den Transformator gerade soviel Strom fliesst, dass die einzuspeisende Blind- und Wirkleistung aufgebracht wird. Es müssen also die Führungsgrössen bzw. Steuergrössen für die Spannungssteuerung oder Spannungsregelung aus der gemessenen Netzspannung selbst bestimmt werden, wobei besondere Massnahmen zur Einhaltung der den gewünschten Blind- und Wirkleistungen entsprechenden Amplituden- und Phasenbeziehung zwischen Stellglied-Ausgangsspannung und Netzspannung nötig sind. Dabei kann das Versorgungsnetz z.B. die symmetrische Drehspannung an der gesicherten Schiene einer unterbrechungsfreien Stromversorgung sein. In diesem Fall kann aus den Messwerten an wenigstens zwei Phasenspannungen des Netzes die Information über Amplitude und Phase der Stellgrösse erhalten werden, mit denen das speisende Stellglied gesteuert wird.

Wird aber ein Einphasennetz gespeist (z.B. um mittels eines Drehstrom-Drehstrom-Umrichters aus einem 50 Hz-Drehstromnetz in das einphasige 16⅔-Hz-Netz einer elektrischen Eisenbahnanlage einzuspeisen), so muss die Information über Frequenz, Phase und Amplitude der Führungsgrössen oder Steuergrössen für das Stellglied aus einem einzigen Messwert, nämlich der Bahn-Wechselspannung bestimmt werden, bzw. es muss aus einem Messwert der Bahnspannung das symmetrische System der Führungsgrössen oder Stellgrössen des Stellgliedes selbst ermittelt werden, deren Amplitude und Phase zur Grundschwingung der gemessenen Bahnspannung in einer gewünschten Beziehung entsprechend einem zu übertragenden Blind- und Wirkstrom stehen.

Die Aufgabe, aus einem Messwert am Ausgang eines Stellgliedes die Grundschwingung (bzw. eine durch Vorgabe eines festen Phasen- und Amplitudenverhältnisses unmittelbar der Grundschwingung zugeordnete Schwingung) zu bestimmen, wird gelöst durch ein Verfahren mit den Merkmalen des Anspruches 1.

Geeignete Vorrichtungen zur Durchführung der Erfindung sowie Weiterbildungen der Erfindung sind in den weiteren Ansprüchen gekennzeichnet und werden anhand von mehreren Ausführungsbeispielen und weiteren Figuren näher erläutert. Dabei zeigt:

Fig. 6 eine schematische Darstellung des Vorgangs zum Ermitteln der Grundschwingung eines einzelnen Messwertes;

Fig. 7 eine vorteilhafte Ausführung der Vorrichtung nach Fig. 6;

Fig. 8 eine Vorrichtung entsprechend Fig. 7, wobei die Grundschwingungen eines Systems aus drei Messwerten gebildet wird.

Gemäss dem der Erfindung zugrunde liegenden Gedanken, der insbesondere bei einem spannungsgesteuerten Direktumrichter mit Drehstromausgang anwendbar ist, soll die im zeitlichen Verlauf eines Messwertes für den Strom an einem Umrichterausgang enthaltene harmonische Grundschwingung ermittelt werden, wenn der Messwert von einer Führungsgrösse mit vorgegebener Sollfrequenz bestimmt ist. Während die Spannung bei Spannungseinprägung durch die Führungsgrösse gesteuert wird, ist die Strom-Grundfrequenz zwar durch die Spannungs-Sollfrequenz gegeben, jedoch folgt der Messwert des Stromes mit einer lastabhängigen Phasenverschiebung und ist von durch den Umrichterbetrieb bedingten Oberschwingungen überlagert, so dass für die Bildung des Umsteuersignals für die Kommandostufe 10 in Fig. 5 zumindest die Phase der Stromgrundschwingung ermittelt werden muss. Bei dem erfindungsgemässen Verfahren ist das Umsteuersignal auch in der Amplitude proportional zur Stromgrundschwingung.

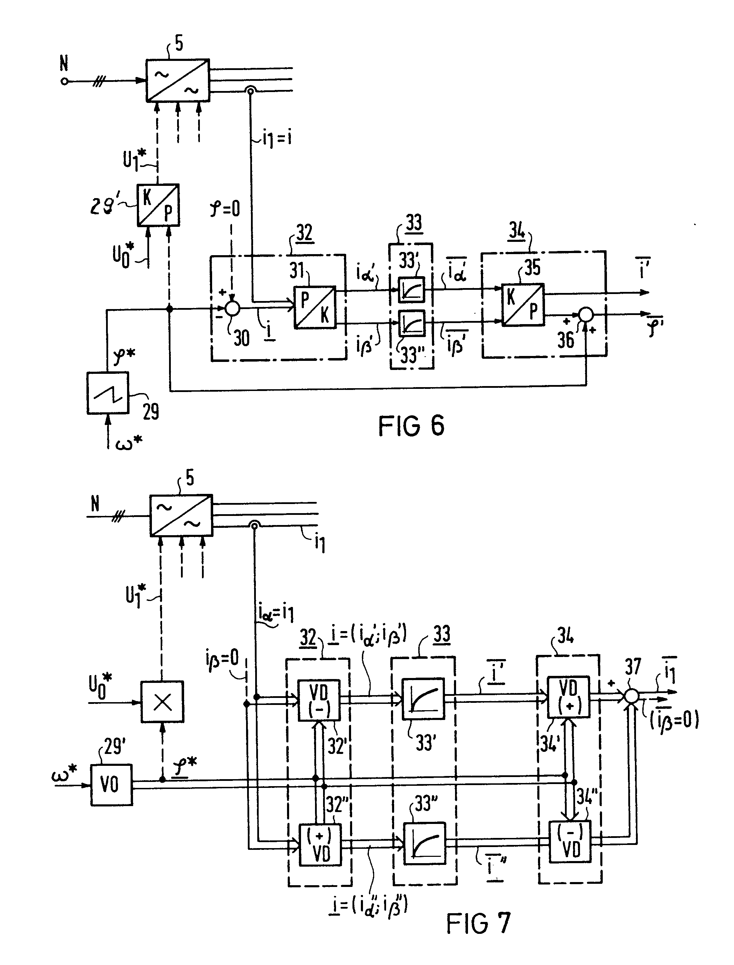

Ausgangspunkt ist ein aus der Führungsgrösse abgeleitetes frequenzveränderliches Winkelsignal, das in einem raumfesten Bezugssystem einen Bezugsvektor festlegt, der mit der vorgegebenen Frequenz der Führungsgrösse und konstantem Umlaufsinn rotiert und eine Koordinatenachse bestimmt. Als erforderliches Mittel zur Bildung des Winkelsignals $\varphi^*$ genügt z.B. eine Eingabeeinrichtung, die in Fig. 6 als ein von der Sollfrequenz $\omega^*$ gesteuerter Sägezahngenerator 29 dargestellt ist. Das Ausgangssignal dieses Sägezahngenerators ist zwischen einem $-180°$ entsprechenden Minimalwert und einem $+180°$ entsprechenden Maximalwert veränderlich und stellt somit ein Winkelsignal $\varphi^*$ dar, durch das im raumfesten Bezugssystem die Bestimmungsgrössen des Bezugsvektors, z.B. eines durch den Betrag 1 und die Richtung $\varphi^*$ in Polarkoordinaten oder durch die orthogonalen Komponenten $\cos\varphi^*$, $\sin\varphi^*$ bestimmten Einheitsvektors festgelegt sind, der bezüglich einer raumfesten Bezugsachse mit der Frequenz $\omega^*$ umläuft. Der Bezug zu der Führungsgrösse ist durch einen polar/kartesisch arbeitenden Koordinatenwandler 29' angedeutet, dem neben dem Winkelsignal $\varphi^*$ auch die Sollamplitude $U_0^*$ der Führungsgrösse (Spannung) zugeführt ist und der diese Polarkomponenten des Führungsgrössenvektors in entsprechende kartesische Komponenten umrechnet, von denen die Komponente $U_0^*$ $\cos\varphi^*$ vom Stellglied (Umrichter 5) als Steueroder Regelgrösse zum Stellen des Stromes $i_1$ verwendet werden kann.

Sodann wird der Messwert $i_1$ derart mit dem Winkelsignal $\varphi^*$ demoduliert, dass zwei im Koordinaten-Mitsystem ($\alpha'$, $\beta'$) die Komponenten $i_{\alpha'}$, $i_{\beta'}$, eines zeitlich veränderlichen Istwert-Vektors $\underline{i}$ darstellende demodulierte Messwertsignale erhalten werden. Die Komponenten des Istwert-Vektors $\underline{i}$ im Koordinaten-Mitsystem sind dabei dem Istwert durch eine zeitunabhängige algebraische Verknüpfungsvorschrift zugeordnet. Hierzu dient die Vektordreherstufe 32 in Fig. 6, der im allgemeinen Fall neben dem Winkelsignal $\varphi^*$ die Bestimmungsgrössen des aus den Messwerten $i_1$, $i_2$, $i_3$ gebildete resultierende Istwert-Vektors zugeführt werden, so dass mit dem Verfahren simultan alle Istwerte $i_1$, $i_2$, $i_3$ gleichzeitig verarbeitet werden.

Fig. 6 stellt jedoch zunächst den Fall dar, dass nur ein einziger Messwert verarbeitet wird. Durch Zuordnung einer konstanten Richtung (z.B. $\varphi = 0$) kann auch aus einem einzigen Messwert ein Istwert-Vektor der Länge $i = i_1/\cos\varphi$ gebildet werden. In Fig. 6 ist zur Verdeutlichung des Verfahrens eine Polardarstellung gewählt, so dass die entsprechenden Polarkoordinaten (konstante Richtung $\varphi = 0$, Vektorbetrag $i = i_1$) der Vektordreherstufe 32 zugeführt sind.

Da der Messwert $i_1$ vor allem die von der Führungsgrösse $U_1^*$ bestimmte Grundfrequenz $\omega^*$ enthält (Umlauffrequenz des Koordinaten-Mitsystems), stellt $\underline{i}$ im Koordinaten-Mitsystem einen durch die Polarkoordinaten ($i$, $\varphi-\varphi^*$) beschreibbaren, im wesentlichen ruhenden Vektor dar. Die Subtraktionsstelle 30 nimmt daher eine Demodulation der Winkelkoordinate des Istwert-Vektors vor, wobei der nachgeschaltete Koordinatenwandler (31) die demodulierten Polarkoordinaten in entsprechende demodulierte Messwertsignale $i_{\alpha'}$, $i_{\beta'}$, umrechnet, die die kartesischen Komponenten $i_{\alpha'}$, $i_{\beta'}$ des Istwertvektors im orthogonalen Koordinaten-Mitsystem darstellen.

Anschliessend werden gemäss der Erfindung die zeitlichen Mittelwerte dieser demodulierten Messwertsignale gebildet. Dies geschieht mittels der Filterstufe 33, die aus jeweils einem integrierenden Bauglied, z.B. einem Tiefpassfilter, für jedes der beiden demodulierten Messwertsignale besteht. Die zeitlichen Mittelwerte stellen dann die auf das Koordinaten-Mitsystem bezogenen kartesischen Komponenten eines mit dem Koordinaten-Mitsystem rotierenden Mitsystem-Vektors $\overline{i}'$ dar. Diese Tiefpassfilter sind zwar an sich dynamische Glieder, jedoch liefern sie Gleichspannungen und dienen nur zur Unterdrückung der Oberschwingungen. Eine Phasenverschiebung der Grundschwingung kann dadurch nicht bewirkt werden.

Schliesslich werden die Ausgangssignale $\overline{i}_{\alpha'}$, $\overline{i}_{\beta'}$, der Tiefpassfilter wieder derart rückmoduliert, dass ein eine raumfeste Komponente des Mitsystemvektors darstellendes rückmoduliertes Messwertsignal $\overline{i}'$ erhalten wird, wobei dem rückmodulierten Messwertsignal durch die zur zeitunabhängigen algebraischen Zuordnungsvorschrift inverse Zuordnung die harmonische Grundschwingung zugeordnet wird. Diese Rückmodulation geschieht mittels der zweiten Vektordreherstufe 34. Dabei werden zunächst die kartesischen Mitsystem-Vektorkomponenten $\overline{i}_{\alpha'}$, $\overline{i}_{\beta'}$, in die Polarkomponenten eines mit dem Koordinaten-Mitsystem rotierenden Polarkoordinatensystems umgerechnet. Anschliessend wird in das ruhende Bezugssystem rücktransformiert, wobei der Vektorbetrag des Mitsystemvektors invariant bleibt und als amplitudengetreues Mass für die Grundschwingungsamplitude abgegriffen werden kann. Da der Mitsystemvektor im Mitsystem ruht, ist seine entsprechende Winkelvariable eine Gleichspannung, der nunmehr an der Additionsstelle 36 das Winkelsignal $\varphi^*$ entsprechend der Rücktransformation ins raumfeste Bezugssystem aufgeschaltet wird, also gegenüber der Aufschaltung an der Subtraktionsstelle 31 mit entgegengesetztem Vorzeichen. Das dabei entstehende Signal $|\overline{\varphi}'|$ stellt dann wiederum eine mit der Frequenz $\omega^*$ veränderliche Grösse dar, die jedoch gegenüber dem Winkelsignal $\varphi^*$ um eine bestimmte Phasendifferenz verschoben ist. Dadurch ist die Phasendifferenz zwischen der Grundschwingung des Messwertes $i_1$ und der Phase $\varphi^*$ der Führungsgrösse ermittelt.

Die Bezeichnung der im wesentlichen die Koordinatenwandler 31 und 35 zur wechselseitigen Umrechnung von Polarkoordinaten in Karthesekoordinaten enthaltenden Stufen 32 und 34 als «Vektordreherstufen» weist bereits darauf hin, dass vorteilhaft nicht mit Polarkoordinaten gearbeitet wird. Fig. 7 zeigt eine in kartesischer Vektordarstellung arbeitende Vorrichtung, mit der ebenfalls nur die Grundschwingung eines einzelnen, skalaren Messwertes ermittelt wird.

Auch hier kann dem Messwert $i_1$ durch Vorgabe einer konstanten Richtung $\varphi$ ein Istwert-Vektor $\underline{i}$ zugeordnet werden; z.B. können die raumfesten kartesischen Komponenten des Istwert-Vektors zu $i_\alpha = i_1$, $i_\beta = \text{const} \cdot i_1$ (entsprechend der Richtung $\varphi = \arccos i_\beta/i_\alpha$), insbesondere mit $i_\beta = 0$ (d.h. $\varphi = 0$) vorgegeben werden. Das mit der Sollfrequenz $\omega^*$ umlaufende Winkelsignal wird unmittelbar durch die beiden kartesischen raumfesten Komponenten $\cos\varphi^*$, $\sin\varphi^*$ eines mit der Frequenz $\omega^*$ umlaufenden Einheitsvektors $\varphi^*$ gegeben, was schematisch durch einen frequenzgesteuerten Oszillator 29′ («Vektoroszillator») dargestellt ist, der zwei um $\pi/2$ versetzte Sinusschwingungen erzeugt. Durch Multiplikation mit der Sollamplitude $U_0^*$ kann dabei wieder die Führungsgrösse $U_1^*$ erzeugt werden, mit der das Stellglied (Umrichter) für den Messwert $i_1$ gesteuert oder geregelt wird. Auch die Vorrichtung nach Fig. 7 enthält eine erste Vektordreherstufe 32, eine Filterdreherstufe 33 und eine zweite Vektordreherstufe 34. Das den Einheitsvektor $\varphi^*$ darstellende Wickelsignalpaar ist dem entsprechenden Wickelsignaleingang eines Vektordrehers 32′ zugeführt, das von dem die Komponenten des Istwert-Vektors darstellenden Signalpaar ($i_\alpha = i_1$, $i_\beta = 0$) beaufschlagt ist.

Dieser Vektordreher führt unmittelbar die Koordinatentransformation vom raumfesten Bezugssystem in das Koordinaten-Mitsystem durch. Auch hier werden also die kartesischen Komponenten $i_{\alpha'}$, $i_{\beta'}$ des Istwert-Vektors im orthogonalen Koordinaten-Mitsystem gebildet. Sie entsprechen den Projektionen des Istwert-Vektors auf die beiden Bezugsachsen $\alpha'$, $\beta'$ des Koordinaten-Mitsystems und stellen die zum rotierenden Bezugsvektor $\varphi^*$ parallele und dazu senkrechte Komponente des Istwert-Vektors dar. Sie sind die demodulierten Messwertsignale und werden mittels zweier Tiefpassfilter, die in Fig. 7 durch ein gemeinsames Filtersymbol 33′ dargestellt sind, in die entsprechenden zeitlichen Mittelwerte umgewandelt. Dadurch werden also bezüglich des Koordinaten-Mitsystems die Komponenten des im Koordinaten-Mitsystem ruhenden Mitsystem-Vektors $\bar{i}'$ ermittelt, dessen Betrag der im Messwert enthaltenden Grundschwingungsamplitude proportional ist.

Ein Vektordreher 34′ in der zweiten Vektordreherstufe transformiert nun die Komponenten des Mitsystemvektors mittels des Winkelsignals $\varphi^*$ in seine raumfesten Komponenten, wobei diese Transformation eine Modulation ist, da der im Koordinaten-Mitsystem ruhende Mitsystemvektor $\bar{i}'$ im raumfesten Bezugssystem mit der Frequenz $\bar{\omega}^*$ umläuft und entsprechend periodische Komponenten aufweist. Die beiden dem Mitsystem zugeordneten Vektordreher 32′, 34′ und das dem Mitsystem zugeordnete Filterglied 33′ wirken also analog den Baugruppen 32, 33, 34 in Fig. 6.

Fig. 7 arbeitet jedoch nach folgender vorteilhafter Weiterbildung des in Fig. 6 dargestellten erfindungsgemässen Verfahrens:

Der Messwert $i_1$ wird auch derart mit dem Winkelsignal demoduliert, dass zwei weitere, die Komponenten des Istvektors in einem mit gleicher Frequenz und entgegengesetzt zum Koordinaten-Mitsystem umlaufenden Koordinaten-Gegensystem darstellende demodulierte Messwertsignale $i_{\alpha''}$, $i_{\beta''}$ erhalten werden. Hierzu enthält die erste Vektorstufe 32 neben dem ersten dem Mitsystem zugeordneten Vektordreher 32′, der die raumfesten Komponenten des Istwert-Vektors ins Koordinaten-Mitsystem umrechnet, noch einen ersten, einem gegensinnig zum Koordinaten-Mitsystem umlaufenden orthogonalen Bezugssystem (Koordinaten-Gegensystem) zugeordneten Vektordreher 32″, der die raumfesten Komponenten des Istwert-Vektors ins Koordinaten-Gegensystem umrechnet.

Ferner werden auch die zeitlichen Mittelwerte der weiteren demodulierten Messwertsignale $i_{\alpha''}$, $i_{\beta''}$ als entsprechende, auf das Koordinaten-Gegensystem bezogene Komponenten $\bar{i}_{\alpha''}$, $\bar{i}_{\beta''}$ eines mit dem Gegensystem rotierenden Gegensystem-Vektors $\bar{i}''$ gebildet. Hierzu enthält die Filterstufe 33 neben den Tiefpassfiltern 33′ für die Vektorkomponenten im Koordinaten-Mitsystem auch für jede Komponente im Koordinaten-Gegensystem je einen Integrator bzw. ein entsprechend dimensioniertes Tiefpassfilter zur Bildung der Gleichanteile dieser Komponenten, wobei die beiden dem Gegensystem zugeordneten Tiefpassfilter wiederum nur durch ein gemeinsames Filtersymbol 33″ dargestellt sind.

Sodann werden auch die zeitlichen Mittelwerte der weiteren demodulierten Messwertsignale derart rückmoduliert, dass ein eine raumfeste Komponente des Gegensystem-Vektors $\bar{i}''$ darstellendes weiteres rückmoduliertes Messwertsignal erhalten wird.

Hierzu enthält die zweite Vektordreherstufe 34 neben dem ersten, dem Mitsystem zugeordneten Vektordreher (34′), der die Komponenten des Mitsystemvektors aus dem Koordinaten-Mitsystem ins raumfeste Bezugssystem umrechnet, noch einen zweiten, dem Gegensystem zugeordneten Vektordreher 34″, der den durch die zeitlichen Mittelwerte der weiteren demodulierten Messwertsignale bestimmten Gegensystem-Vektor $\bar{i}''$ in dessen Komponenten bezüglich des raumfesten Bezugssystems umrechnet.

Schliesslich werden die beiden rückmodulierten Messwertsignale zu einem eine Komponente eines resultierenden Vektors darstellenden elektrischen Signal addiert, dem durch die zur zeitunabhängigen algebraischen Zuordnungsvorschrift inverse Zuordnung die interessierende harmonische Schwingung des Messwertes $i_1$, in diesem Fall also die Grundschwingung, zugeordnet wird. Hierzu dient das Additionsglied 37, das durch komponentenweise Addition der raumfesten Vektoren $\bar{i}'$, $\bar{i}''$ den zum Istwert-Vektor gehörenden Istwert-Grundschwingungsvektor $\bar{i}$ bildet. Da im hier betrachteten Fall der Istwert-Vektor aus dem Messwert $i_1$ durch die algebraische Zuordnung $i_\alpha = i_1$, $i_\beta = 0$ gebildet ist, ist auch nur $i_{\alpha'}$, also die zum Ist-Vektor parallele Komponente des resultierenden Vektors $\bar{i}$ von Interesse und beschreibt die Grundschwingung des Messwertes amplitudengetreu und phasenrichtig.

Wie bereits im Zusammenhang mit Fig. 1 erläutert wurde, können die drei Umrichterströme $i_1$, $i_2$, $i_3$ zu einem resultierenden Istwert-Vektor («Laststromvektor») $\bar{i}$ zusammengesetzt werden, wobei im Fall einer einphasigen Last wegen $i_1 = -i_2$ der Laststromvektor $\bar{i}$ gegenüber der dem Ausgangsstrom $i_1$ zugeordneten Vektor um 30° gedreht ist. Die Anordnung nach Fig. 6 oder 7 lässt sich jedoch ohne weiteres auch für eine dreiphasige Last anwenden, wenn der ersten Vektordreherstufe nicht die beiden Bestimmungsgrössen eines nur dem Messwert $i_1$ zugeordneten Vektors kon-

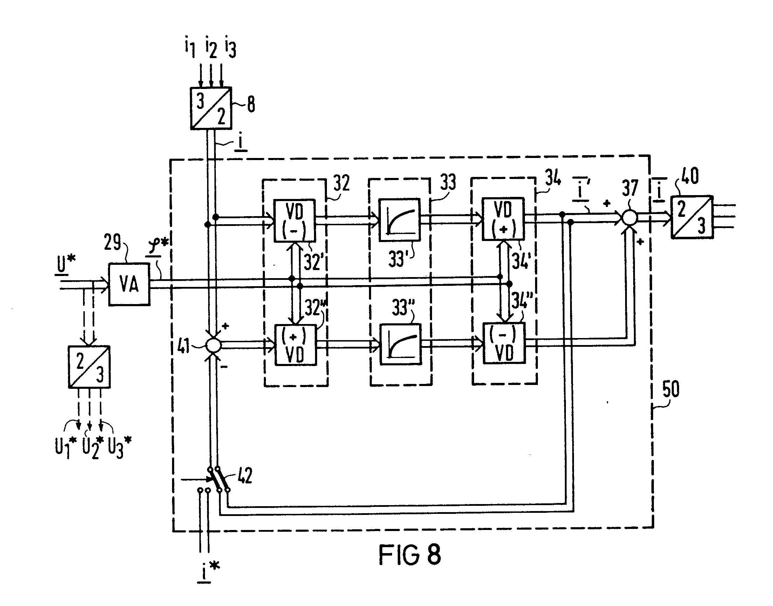

stanter Richtung zugeführt werden, sondern die beiden Bestimmungsgrössen des aus $i_1$, $i_2$ und $i_3$ resultierenden Laststromvektors. Dies ist in Fig. 8 gezeigt.

Hier ist davon ausgegangen, dass die Führungsgrösse für die Messwerte nicht durch die Sollfrequenz $\omega^*$ vorgegeben ist, sondern durch die kartesischen ortsfesten Komponenten eines mit der Frequenz $\omega^*$ umlaufenden Sollvektors, z.B. den Spannungssollvektor $\underline{U}^*$. Der Vektoroszillator 29' aus Fig. 7 kann in diesem Fall als Vektoranalysator 29'' ausgebildet sein, häufig ist aber das mit dem Sollvektor umlaufende Winkelsignal $\varphi^*$ auch an einer anderen Stelle der Regeleinrichtung abgreifbar. Die Zusammensetzung der Messwerte $i_1$, $i_2$, $i_3$ zum Istwert-Vektor $\underline{i}$ ist bereits erläutert worden.

Auch die erste Vektordreherstufe 32, die Filterstufe 33 und die zweite Vektordreherstufe 34 sowie das Additionsglied 37 sind entsprechend Fig. 7 aufgebaut und arbeiten analog. Dadurch wird ein resultierender Vektor $\underline{\bar{i}}$ erzeugt, der nunmehr als ein Laststrom-Grundschwingungsvektor eindeutig die in den einzelnen Ausgangsströmen enthaltenen Grundschwingungen $\bar{i}_1$, $\bar{i}_2$, $\bar{i}_3$ beschreibt. Die Zuordnung des Grundschwingungsvektors $\underline{\bar{i}}$ zu diesen einzelnen Grundschwingungen kann über einen nachgeschalteten ⅔-Koordinatenwandler 40 erfolgen.

Die gesamte, mit 50 bezeichnete Baugruppe kann demnach als ein das dynamische Filter 10' in Fig. 1 ersetzendes statisches Vektorfilter eingesetzt werden, um aus den Messwerten des Stromes am jeweiligen Umrichterausgang die Grundschwingung phasenrichtig zu erfassen und beim Nulldurchgang der Grundschwingung ein Umschaltsignal abzugeben, mit dem die Kommandostufe eines Direktumrichters die Umschaltung zwischen den Antiparallelen, auf einen gemeinsamen Ausgang arbeitenden Gleichrichterbrücken eines Direktumrichters vornimmt.

Da das Stromsystem im wesentlichen dem Führungsgrössensystem folgt und mit dessen Frequenz umläuft, liefert bereits die Darstellung des resultierenden Stromvektors $\underline{i}$ im Koordinaten-Mitsystem am Ausgang des Vektordrehers 32' im wesentlichen Gleichgrössen. Sie sind nur von geringen Oberschwingungen überlagert, die weitgehend demjenigen Anteil des Stromsystems zugeordnet sind, der durch den Gegensystemvektor beschrieben ist und gegenüber dem Mitsystem mit doppelter Frequenz umläuft. Die Auslegung des Filtergliedes 33' zur Unterdrückung dieser geringen Oberschwingungen stellt keine wesentlichen Probleme dar. Der dem Gegensystem zugeordnete erste Vektordreher 32'' jedoch liefert Ausgangsgrössen mit einem Gleichanteil, der gegenüber den entsprechenden Mitsystemgrössen gering und von erheblichen Oberschwingungen überlagert ist, die von dem gegenüber dem Koordinaten-Gegensystem mit doppelter Frequenz rotierenden Mitsystem-Anteil des Stromsystems hervorgerufen werden. Die Auslegung des dem Gegensystem zugeordneten Filtergliedes kann daher unerwünscht grosse Zeitkonstanten bedingen. Dies kann jedoch dadurch vermieden werden, dass bei einem derartigen dreiphasigen System von Messwerten, bei dem für wenigstens zwei Phasen der jeweilige Messwert ermittelt und zu einem gemeinsamen Istwert-Vektor zusammengesetzt werden, für die Bildung der zeitlichen Mittelwerte der weiteren demodulierten Messwertsignale (d.h. des Gegensystem-Vektors $\bar{i}''$) nicht die weiteren demodulierten Messwertsignale selbst gemittelt werden, sondern eine Mittelung der auf das Koordinaten-Gegensystem bezogenen Komponenten der vektoriellen Differenz aus Istvektor und Mitsystemvektor vorgenommen wird.

Dem Eingang des dem Gegensystem zugeordneten Filtergliedes werden also nicht die Komponenten des Istwert-Vektors $\underline{i}$ selbst zugeführt, sondern die Komponenten des Differenzvektors $\underline{i} - \underline{i}'$. Am Ausgang des Filtergliedes 33 stehen die Komponenten des Mitsystem-Vektors $\bar{i}'$ bezüglich des Koordinaten-Mitsystems an. Die Bildung der Differenz $\underline{i} - \underline{i}'$ erfolgt komponentenweise. Hierzu kann am Eingang des dem Gegensystem zugeordneten Filtergliedes 33'' im Prinzip eine entsprechende Subtraktionsstelle vorgesehen sein, der die Ausgangsgrössen des Vektordrehers 32'' und über zwei hintereinander geschaltete Vektordreher, von denen der erste Vektordreher den Mitsystemvektor zunächst ins raumfeste Bezugssystem und der zweite Vektordreher ihn dann ins Gegensystem transformiert, die Ausgangsgrössen des Filtergliedes 33' zugeführt werden.

Einfacher ist jedoch die in Fig. 8 gezeigte Anordnung, bei der dem Vektordreher 32'' ein Subtraktionsglied 41 zur komponentenweisen Subtraktion des am Ausgang des Vektordrehers 34' abgegriffenen Mitsystemvektors vorgeschaltet ist. Zwischen dem Ausgang des Vektordrehers 34' und dem Subtraktionsglied 41 ist durch einen Umschalter 42 angedeutet, dass auch eine andere Variante möglich ist, bei der dem Subtraktionsglied 41 ein entsprechender Laststrom-Sollvektor $\underline{i}^*$ zur komponentenweisen Subtraktion vom Istwert-Vektor aufgeschaltet wird. Dies ist vor allem vorteilhaft, wenn durch das Führungsgrössensystem nicht der Soll-Spannungsvektor $\underline{U}^*$, sondern ein Sollstrom-Vektor $\underline{i}^*$ vorgegeben ist, d.h. der Umrichter nicht mit Spannungseinprägung, sondern mit Stromeinprägung arbeitet.

Bei den bisher besprochenen Ausführungsformen ist die Grundschwingung ermittelt worden, wobei das aus der Führungsgrösse abgeleitete Winkelsignal durch die Sollfrequenz $\omega^*$ der Führungsgrösse unmittelbar gegeben ist. Der Istwert-Vektor ist dabei im raumfesten Bezugssystem durch eine zeitunabhängige algebraische Verknüpfung gewonnen und dem die raumfeste Komponente des Mitsystem-Vektors darstellenden rückmodulierten Messwertsignal ist die harmonische Schwingung durch die entsprechende inverse Verknüpfung zugeordnet. Davon abweichend kann aber zur Bildung des Winkelsignals die Phasendifferenz zwischen dem ermittelten Messwertsignal und dem Messwert umfasst und die Frequenz des Winkelsignals solange nachgestellt werden, bis die Phasendifferenz den durch die gewünschte Phasenbeziehung gegebenen Wert erreicht. Derartige Ausführungsformen werden nun noch erläutert.

Insbesondere für den Fall, dass die vom Stellglied gelieferte Spannungs- oder Stromgrundschwingung gegenüber der Spannungs-Grundschwingung, die am Ausgang eines nachgeschalteten Ankopplungsnetzwerkes vorliegt und synchron in ein Versorgungsnetz eingespeist werden soll, um den Spannungsabfall am Stellglied entsprechenden Wirk- und Blindanteil abweichen soll, kann es wünschenswert sein, aus einem am Ausgang des Ankopplungsnetzwerkes abgegriffenen Messwert eine harmonische Schwingung zu ermitteln, die zur Steuerung des Stellgliedes selbst verwendet wird. Als Führungsgrösse dient dann die Messwert-Grundschwingung bzw. das diese harmonische Schwingung beschreibende Messwertsignal aus der zwar das Steuergrössensystem des Umrichters gebildet wird, jedoch wird für das Messwertsignal eine Winkeldifferenz gegenüber der Messwert-Grundschwingung vorgegeben. Durch Nachführen der Winkelsignal-Frequenz und/oder der Sollfrequenz wird dabei die Phasendifferenz zwischen dem Messwertsignal und dem Winkelsignal auf einen der vorgegebenen Winkeldifferenz entsprechenden Sollwert eingeregelt.

Liegt ein System von symmetrischen Messwerten vor, wie dies bei dem erwähnten Fall einer Einspeisung in ein symmetrisches Drehspannungsnetz gegeben ist, so kann die Zuordnung des Istwertvektors zu den Messwerten des gespeisten Netzes ebenfalls durch die bereits beschriebene algebraische Zuordnung gewonnen werden. In dem Fall, dass ein symmetrisches System von drei Stellgrössen für ein Stellglied mit Drehstromausgang gebildet werden soll, wobei der Drehstromausgang mittels einer Symmetriereinrichtung an ein einphasiges Versorgungsnetz angeschlossen ist und somit nur eine einzige Wechselspannungsgrösse als Messwert vorliegt, kann die Zuordnung eines Istwert-Vektors zu dieser Wechselspannung dadurch vorgenommen werden, dass die eine raumfeste Komponente des Istwert-Vektors durch die Netzspannung selbst vorgegeben wird, die andere Komponente des Istwert-Vektors aber durch eine Phasenverschiebung von etwa 90° aus dem Messwert gebildet wird.

Die bisher beschriebene Vorrichtung zur Durchführung des Verfahrens weist bereits auf:

a) Mittel zur Bildung eines mit der Frequenz der harmonischen Schwingung veränderlichen Winkelsignals, das im raumfesten Bezugssystem einen Bezugsvektor festlegt, der mit dieser Frequenz im gegebenen Umlaufsinn rotiert und eine Koordinatenachse eines rotiernden orthogonalen Koordinaten-Mitsystems bestimmt,

b) eine erste Vektordreherstufe, die den Messwert derart mit dem Winkelsignal demoduliert, dass zwei im Koordinaten-Mitsystem die Komponenten eines zeitlich veränderlichen Istwert-Vektors darstellende demodulierte Messwertsignale erhalten werden, wobei die Komponenten des Istwertvektors im Koordinaten-Mitsystem aus dem momentanen Messwert durch eine erste Zuordnungsschaltung gewinnbar sind,

c) eine Filterstufe, die aus den zeitlichen Mittelwerten der demodulierten Messwertsignale auf das Koordinaten-Mitsystem bezogene Komponenten eines mit dem Koordinaten-Mitsystem rotierenden Mitsystemvektors bildet und

d) eine zweite Vektordreherstufe, die die auf das Koordinaten-Mitsystem bezogenen Komponenten des Mitsystem-Vektors derart rückmoduliert, dass ein rückmoduliertes, eine raumfeste Komponente des Mitsystem-Vektors darstellendes Messignal erhalten wird, wobei diese Komponente durch eine invers zur ersten Zuordnungsschaltung arbeitende zweite Zuordnungsschaltung der harmonischen Schwingung zugeordnet wird.

Anstelle aber das Winkelsignal unmittelbar aus der Führungsgrösse abzuleiten, sind hier als Mittel zur Bildung des Winkelsignals ein Nachführregler, dem als Istwert die tatsächliche Phasendifferenz und als Sollwert die gewünschte Phasendifferenz zwischen dem Winkelsignal und der hamonischen Schwingung zugeführt sind, und ein nachgeschalteter Integrator vorgesehen, an dem die Phase des Winkelsignals abgreifbar ist.

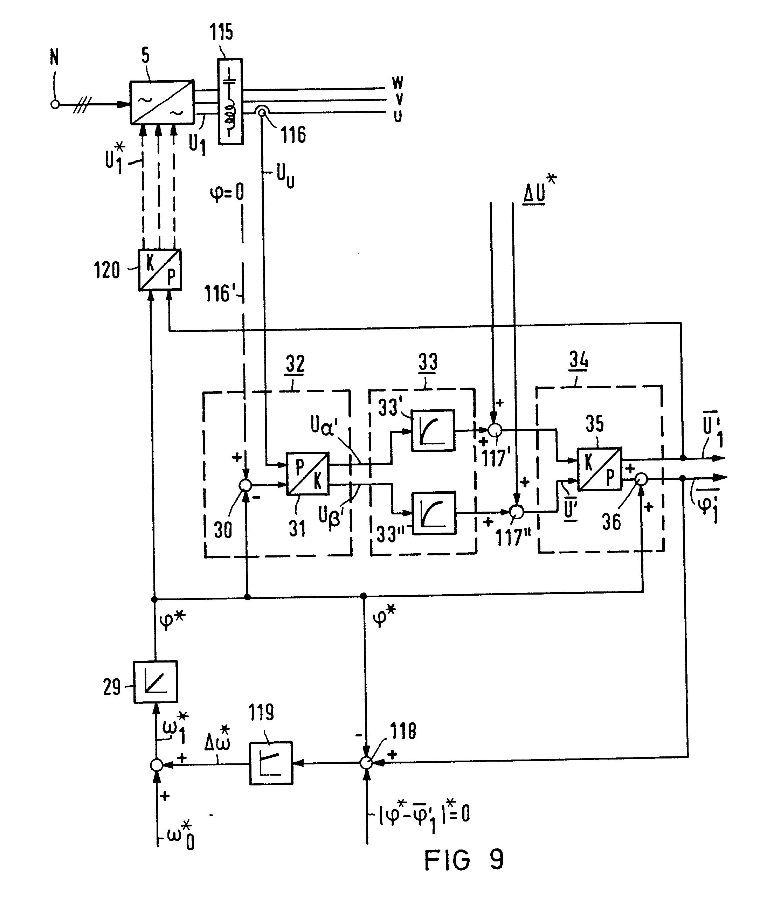

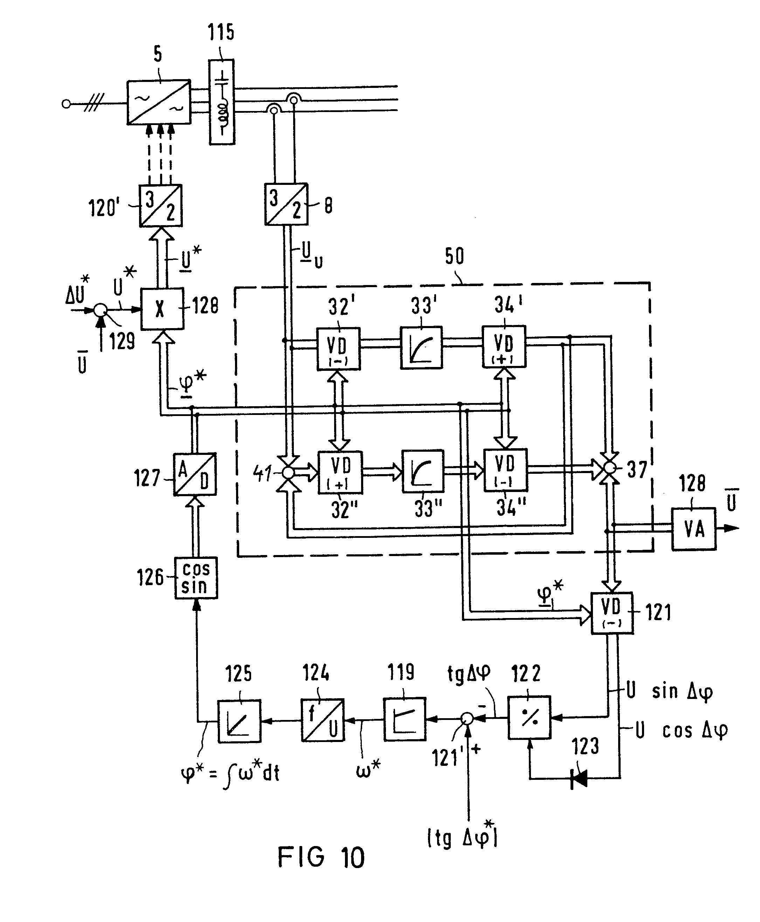

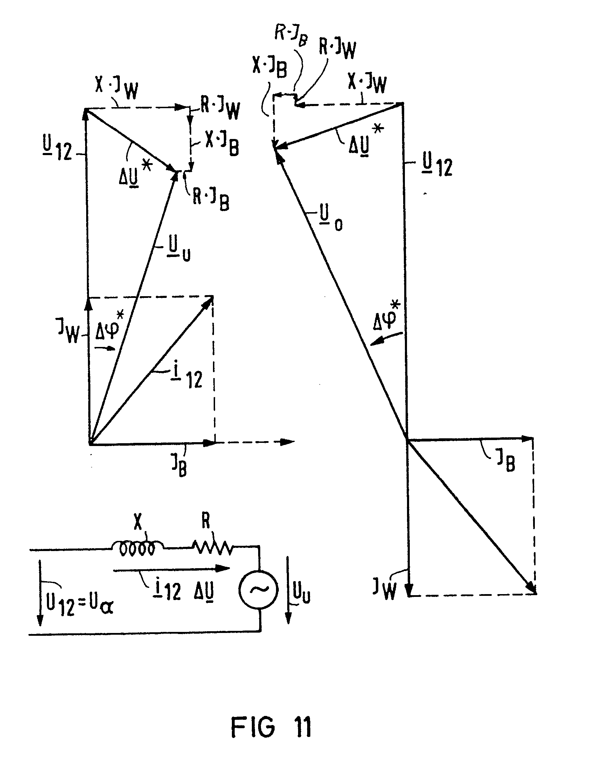

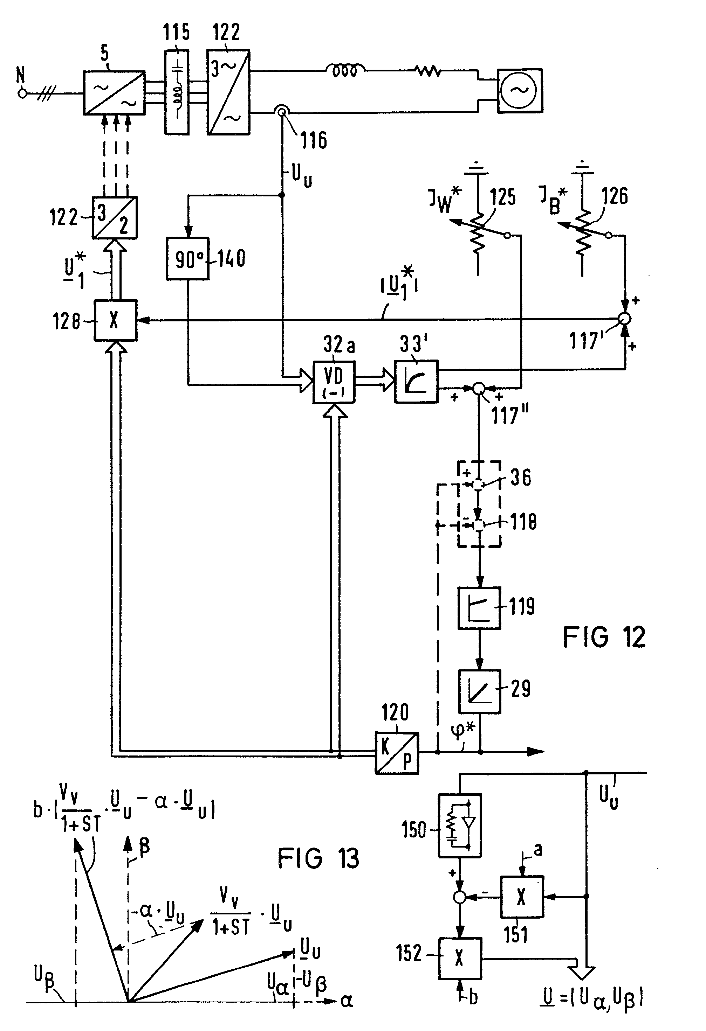

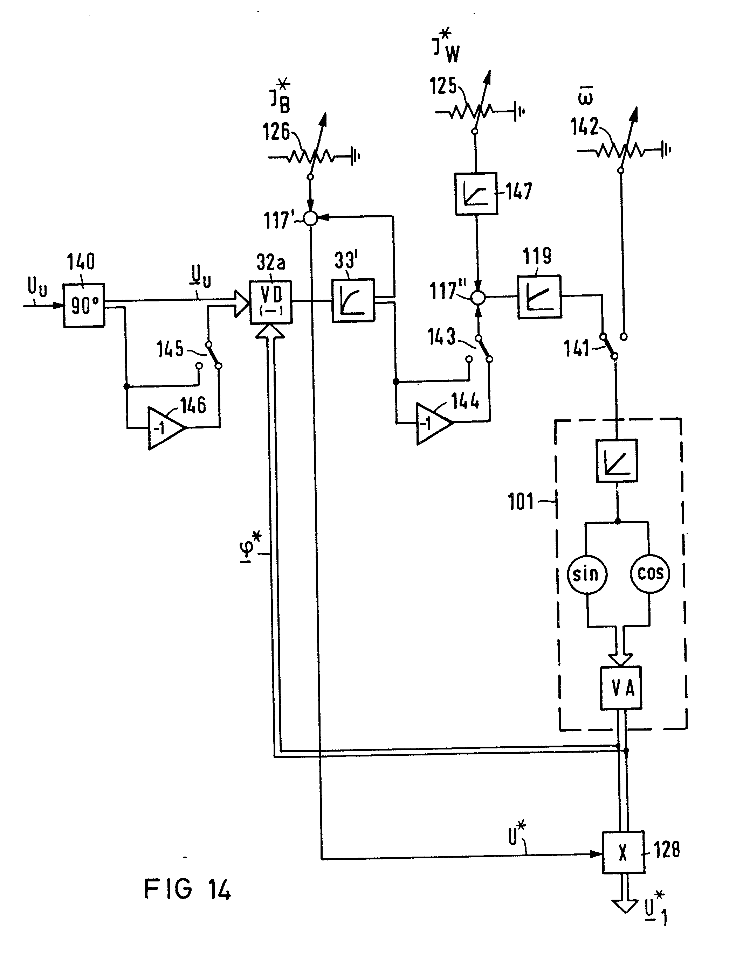

Fig. 9 zeigt wieder eine im wesentlichen mit Polarkoordinaten arbeitende Ausführungsform der Erfindung, während bei der Ausführungsform nach Fig. 10 orthogonale Koordinaten verwendet werden. Fig. 11 ist ein Vektordiagramm zur Verdeutlichung des Einflusses von Blindstrom und Wirkstrom auf den Zusammenhang zwischen der Ausgangsspannung eines Stellgliedes und der Netzspannung bei Einspeisung in ein Netz. Fig. 12 zeigt eine vereinfachte Ausführungsform der Erfindung bei Anwendung auf die Einspeisung in ein einphasiges Netz mittels eines dreiphasigen Stellgliedes. Fig. 13 stellt schematisch eine Zuordnungsschaltung dar, die einem einphasigen Messwert die orthogonalen Komponenten des Istwert-Vektors zuordnet. Die Vorrichtung nach Fig. 14 entspricht der Vorrichtung nach Fig. 12, wobei jedoch eine Umkehrung der Energieflussrichtung für den Wirkstrom vorgesehen ist.

Fig. 9 geht aus von Fig. 6. Ein Stellglied (in diesem Fall wieder ein von einem Drehstromnetz N gespeister Direktumrichter 5 mit Drehstromausgang) ist über eine Anordnung 115, die Filter und einen Ankoppeltransformator enthält, an ein mit u, v, w bezeichnetes elektrisches Netz, z. B. die sichere Schiene einer unterbrechungsfreien Stromversorgung, angeschlossen. Dabei ist vorgesehen, mittels eines Messgliedes 116 die Spannung $U_u$ zu erfassen, die gegenüber der Ausgangsspannung $U_1$ des Stellgliedes 5 um die durch den Wirkstrom und Blindstrom an der Schaltungsanordnung 115 abfallenden Spannung $\Delta U$ abweicht.

Zunächst sei angenommen, dass ein Winkelsignal $\varphi^* = \omega^*_1 \cdot t$ bereits verfügbar ist, um durch Demodulation in der ersten Vektordrehstufe 32 die Winkelkoordinate $\varphi' = \varphi - \varphi^*$ in einem mit der Frequenz $\omega^*_1$ rotierenden Polarkoordinatensystem zu bilden, aus dem der nachfolgende polarkartesische Koordinatenwandler 31 das «Vektorsi-

gnal» $U'_\alpha$, $U'_\beta$ erzeugt, das die kartesischen Komponenten des Istwertvektors bezüglich des Koordinaten-Mitsystems darstellt. Die beiden kartesischen Komponenten werden an Tiefpassfiltern 33', 33" der Filterstufe 33 gemittelt, wobei die Mittelwerte

$$\overline{U}_{\alpha'} = \overline{|U|.\cos\varphi'}, U_{\beta'} = \overline{|U|.\sin\varphi'}$$

(Komponenten des Mitsystem-Vektors $\overline{U}'$) entstehen.

Für den Fall, dass an den Additionsstellen 117', 117", die zur komponentenweisen Addition eines vorgebbaren Zusatzvektors $\Delta\underline{U}$ dienen, keine vektorielle Addition vorgenommen wird, liefert die Rückmodulation von $\overline{U}_{\alpha'}$ und $\overline{U}_{\beta'}$ in raumfeste Polarkoordinaten mittels der zweiten Vektordreherstufe 34 (kartesisch-polarer Koordinatenwandler 35 und Addition des Winkelsignals $\varphi^*$ am Punkt 36) die Betragskomponente $\overline{U}'$ des Mitsystemvektors, die gleich der Grundschwingungsamplitude U des Messwertes ist, und eine Richtungskomponente $\overline{\varphi}'$, die gleich der Phasendifferenz $\varphi'$ zwischen der Messwert-Grundschwingung und dem Winkelsignal $\varphi^*$ ist. Um die vorausgesetzte Frequenzgleichheit zwischen $U_u$ und $\varphi^*$ sicherzustellen, wird an der Additionsstelle 118 die Phasendifferenz $\varphi^* - \overline{\varphi}'$ (Winkel zwischen den Vektoren $\varphi^*$ und $\overline{U}$) gebildet und mit einem entsprechenden Sollwert $(\varphi^* - \overline{\varphi}')^* = 0$ verglichen. Das Vergleichsergebnis wird einem PI-Regler 119 aufgeschaltet, der einem entsprechenden Winkelsignalgenerator 29 für das Winkelsignal $\varphi^*$ vorgeschaltet ist. Der Winkelsignalgenerator 29 kann wieder ein frequenzgesteuerter Sägezahngenerator sein, z.B. ein spannungsgesteuerter Impulsgenerator, dessen Impulse von einem als Integrator wirkenden Impulszähler gezählt werden, der jeweils bei Erreichen eines bestimmten, $+180°$ entsprechenden Zählerstand auf einen $-180°$ entsprechenden Zählerstand rückgesetzt wird. Das Ausgangssignal des Reglers 119 stellt somit die Frequenz für das Winkelsignal $\varphi^*$ dar, das durch entsprechende vorübergehende Frequenzänderung jeweils der Phase $\overline{\varphi}'$ so nachgeführt wird, dass das Regelvergleichsergebnis verschwindet $(\varphi^* = \overline{\varphi}')$. Da die Netzfrequenz im allgemeinen stets etwas um eine Nennfrequenz $\omega^*_0$ schwankt, kann einer entsprechenden Additionsstelle am Eingang des Generators 29 die Nennfrequenz $\omega^*_0$ vorgegeben und das Regelausgangssignal $\Delta\omega^*$ nur zur exakten Synchronisation auf die jeweils vorliegende Netzfrequenz verwendet werden.

Soll nun für die Stellglied-Ausgangsspannung $U_1$ eine Steuergrösse $U^*_1$ so vorgegeben werden, dass über die Anordnung 115 ein gewisser Soll-Wirkstrom und Soll-Blindstrom fliesst, so kann bei Kenntnis der Dimensionierung dieser Anordnung 115 aus diesen Strömen ein vektorieller Spannungsabfall $\Delta U^*$ errechnet werden. Dieser wird an den Additionsstellen 117', 117" aufgeschaltet. Dadurch wird bewirkt, dass sich Amplitude und Phase gegenüber der gemessenen Netzspannung $U_u$ gerade um den zu den Stromsollwerten gehörenden Betrag verändern.

Der zweiten Vektordreherstufe 34 wird nun der durch die Addition gebildete Mitsystem-Vektor $\overline{U}'_1 = \overline{U}' + \overline{\Delta U}^*$ aufgeschaltet und dadurch der entsprechende Sollbetrag $\overline{U}'_1$ für die Steuergrösse $U^*_1$ sowie eine Richtungskomponente $\overline{\varphi}'_1$ erhalten. Der Nachführregler 119 führt nun die Phase $\varphi^*$ des Winkelsignals $\varphi^*$ nicht mehr direkt der Phase $\overline{\varphi}'$ der Messwertgrundschwingung (Vektor $\overline{U}'$|$U'$) nach, sondern der Phase $\overline{\varphi}'_1 = \overline{\varphi}' + \Delta\varphi^*$, wobei $\Delta\varphi^*$ die zu $\underline{\Delta U}^*$ gehörende Soll-Phasenverschiebung ist. Folglich stellt das Winkelsignal $\varphi^*$ tatsächlich die Phase der Steuergrösse $U^*_1$ dar und kann an einem polar-kartesischen Koordinatenwandler 120 zusammen mit dem Soll-Betrag $\overline{U}'_1$ zur Steuergrösse selbst verarbeitet werden.

Während bisher von einem einzelnen Messwert ausgegangen ist und etwa erforderliche Stellgrössen für die anderen Phasenspannungen jeweils durch analoge Schaltungen ermittelt werden müssen, kann bei Einspeisung in ein Drehstromnetz gleich von zwei oder drei der Messwerte ausgegangen werden, denen durch einen ³⁄₂-Koordinatenwandler 8 (Fig. 10) die kartesischen, raumfesten Komponenten des Istwertvektors gemäss einer zeitunabhängigen algebraischen Zuordnungsvorschrift zugeordnet werden. Anstelle der in Polarkoordinaten arbeitenden Vektordreherstufe 32 und der zweiten Vektordreherstufe 34 werden die kartesisch arbeitenden Vektordreher 32' und Vektordreher 34' verwendet. Dadurch wird der Istwertvektor $\underline{U}_u$ in das mit dem Drehsinn des Drehspannungsnetzes mitrotierenden Koordinaten-Mitsystem $\alpha$, $\beta'$ transformiert, seine Komponenten gemittelt (durch ein gemeinsames Symbol 33' dargestellt) und rücktransformiert. Sofern das Drehspannungsnetz ein symmetrisches Mitsystem darstellt, genügen diese Bauteile; ist dagegen auch ein Gegensystem vorhanden und in der Steuerung des Stellgliedes 5 zu berücksichtigen, so kann auch mittels eines Vektordrehers 32" der Istwertvektor in ein entsprechendes entgegengesetzt zum Mitsystem rotierendes Koordinaten-Gegensystem transformiert, mittels eines Tiefpassfilters 33" zur Bildung eines Gegensystem-Vektors geglättet und an einem Vektordreher 34" ins raumfeste Bezugssystem rücktransformiert werden. Durch Subtraktion (Subtraktionsstelle 41) des Mitsystemvektors vom Istwertvektor kann dabei das Gegensystem bei der Ermittlung des Gegensystemvektors isoliert werden. An der Additionsstelle 37 werden Mitsystemvektor und Gegensystemvektor zu der gesuchten harmonischen Schwingung zusammengesetzt. Diese Bauteile wirken wie die Baugruppe 50 nach Fig. 7.

Bei dieser mit orthogonalen Komponenten arbeitenden Vorrichtung ist entsprechend der Additionsstelle 118 in Fig. 9 für die Winkelkomponenten ein Vektordreher 121 vorgesehen, der an seinem Winkelsignaleingang von dem dem Winkelsignal $\varphi^*$ entsprechenden Bezugsvektor $\underline{\varphi}^*$ und an seinem Vektorsignaleingang vom Summationsvektor des Additionsgliedes 37 beaufschlagt ist. Die Ausgangssignale dieses Vektordrehers beschreiben mit $U\sin\Delta\varphi$ und $U\cos\Delta\varphi$ den Grundschwingungs-Vektor $\underline{U}$, wobei mit $\Delta\varphi$ die Phasen-

differenz zwischen dem Winkelsignal $\varphi^*$ und der Grundschwingung $\overline{\varphi}'$ bezeichnet ist. Durch Division der beiden Komponenten wird eine monoton mit der Phasendifferenz $\Delta\varphi$ steigende Funktion $tg\Delta\varphi$ gebildet, wobei die Diode 123 dafür sorgt, dass für $\Delta\varphi < -90°$ und $\Delta\varphi > +90°$ das Ausgangssignal des Dividierers 122 am äusseren Ende des Rechenbereiches liegt, so dass die gesamte Regelung diesen instabilen Bereich rasch verlässt. Durch Vergleich dieser Funktion $tg\Delta\varphi$ mit einem entsprechenden Sollwert an der Vergleichsstelle 121' wird die Eingangsgrösse für den Nachführregler 119 gebildet, dessen Ausgangssignal $\omega^*$ über einen Spannungsfrequenzwandler (spannungsgesteuerter Impulsgenerator 124) einem rücksetzbaren Zähler 125 aufgeschaltet wird. Dessen Ausgangssignal $\varphi^* = \int\omega^* dt$ wird einem als Funktionsgenerator dienenden Festwertspeicher 126 zugeführt und dort in die Funktionen $\cos\varphi^*$, $\sin\varphi^*$ umgesetzt. Ein anschliessender Digital/Analog-Wandler 127 liefert ein analoges Signalpaar, das als Winkelsignal der Baugruppe 50 für die entsprechende Koordinatentransformation zugeführt wird. Die hier beschriebene Schaltung wirkt dabei ebenso als Vektorfilter wie Fig. 7, ohne dass jedoch die Frequenz des Winkelsignals von aussen vorgegeben wird.

Um nun auf die im Zusammenhang mit Fig. 9 beschriebene Weise das Stellglied 5 steuern können, kann die Grundschwingungsamplitude $\overline{U}$ des Messwertes über einen Vektoranalysator 128 an der Baugruppe 50 abgegriffen werden. Durch Zuschalten eines Amplituden-Zusatzsollwertes $\Delta U^*$ am Additionsglied 129 kann daraus die Sollamplitude $U^*$ für das durch den Steuervektor $\underline{U}^*$ vorzugebende Steuergrössensystem des Direktumrichters 5 gebildet werden. Die entsprechende Phasenverschiebung $\Delta\varphi^*$ des Steuervektors $\underline{U}^*$ gegenüber dem Istwert-Vektor $\underline{U}_u$ kann an der Regelvergleichsstelle 121' vorgegeben werden. Werden nun die beiden Komponenten des Bezugsvektors $\varphi^*$ mit dem Sollbetrag $U^*$ multipliziert, so erhält man den gewünschten Steuervektor $\underline{U}^*$, durch den die entsprechenden Führungs- oder Stellgrössen für den Direktumrichter 5 geliefert werden.

Dieser Vektor $\underline{U}^*$ entspricht letzlich in der gleichen Weise dem Mitsystemvektor, wie der Vektor $\underline{U}^*_1$ dem Vektor $\underline{U}_u$ nach Fig. 9, auch wenn für die Vektoraddition (Additionsstellen 117', 117'' in Fig. 9) bei der Vorrichtung nach Fig. 10 getrennte Additionsstellen für Betrag und Phase vorgesehen sind, denen die entsprechenden, in der zweiten Vektordreherstufe gebildeten Grössen erst nach der Rückmodulation ins raumfeste Bezugssystem aufgeschaltet sind. Letztlich wird also auch hier der Mitsystem-Vektor aus den Mittelwerten der demodulierten Messwertsignale und geeignet vorzugebenden Sollwerten, die dem einzuspeisenden Wirk- und Blindstrom entsprechen, so gebildet, wie es der Vektorsumme des durch die Mittelwerte bestimmten Vektors und eines durch die Sollwerte bestimmten Zusatzvektors entspricht. Die durch die Rückmodulation gelieferte, den raumfesten Komponenten des Mitsystemvektors zugeordnete Schwingung wird wiederum als Steuergrösse für das Stellglied abgegriffen.

Im folgenden wird der bevorzugte Anwendungsfall betrachtet, dass zwischen zwei Wechselrichterausgängen, zwischen denen die verkettete Spannung $U_{12}$ anliegt, über einen Ankoppeltransformator eine einphasige Last, insbesondere ein Wechselspannungsnetz, angeschlossen ist. Eine Symmetriereinrichtung entsprechend der DE-OS 2939514 sorgt über geeignete Blindleistungssteller dafür, dass bei Vorgabe eines symmetrischen Stellgrössensystems die Ausgänge des Wechselrichters symmetrisch belastet sind. Dazu ist es erforderlich, dass über den die beiden Ausgänge belastenden Ankoppeltransformator neben der ins Wechselspannungsnetz einzuspeisenden Wirkleistung eine zur Symmetrierung erforderliche Blindleistung fliesst.

In Fig. 11 ist das Ersatzschaltbild des Ankoppeltransformators angegeben, dessen Induktivität durch den Widerstand X und dessen ohmscher Widerstand durch R symbolisiert ist. Dabei sind die durch den Sollvektor $\underline{U}^*$ bestimmte Wechselspannung $U_{12}$ und der vom Stellglied (Wechselrichter) über den Ankoppeltransformator getriebene Strom $i_{12}$ als entsprechende Vektoren $\underline{U}_{12}$, $\underline{i}_{12}$ aufgefasst, wobei im linken Diagramm von Fig. 11 die Lieferung von Wirkleistung und Blindleistung in das Wechselstromnetz erfolgt, während im rechten Diagramm zwar auch der Steller Blindleistung aufbringt, jedoch die Wirkleistung in den Steller gespeist wird. Der Blindleistungsanteil $I_B$ des Stromes $\underline{i}_{12}$ bewirkt einen ohmschen Spannungsabfall $\overline{R}$ . $I_B$ und einen induktiven Spannungsabfall $x$ . $I_B$, der Wirkstromanteil $I_W$ einen ohmschen Spannungsabfall $R$ . $I_W$ und einen induktiven Spannungsabfall $X$ . $I_W$. Die Vektoraddition dieser Grössen führt zum Spannungsvektor $\underline{U}_u$. Man erkennt, dass der Betrag des Spannungsvektors $\underline{U}_{12}$ im wesentlichen $(R\approx 0)$ durch $|U_u|$ . $\cos\Delta\varphi^* + x$ . $I_B$ gegeben, dagegen $\tan\Delta\varphi^*$ proportional $x$ . $I_W$ ist. Da die Richtung des Vektors $\underline{U}_{12}$ bzw. $\underline{U}^*$ durch $\varphi^*$ gegeben und $(\varphi^*-\overline{\varphi}')$ dem Sollwert $\overline{\Delta\varphi}^*$ nachgeführt ist, $|U_u|$ $\cos\varphi^*$ am Ausgang der Filterstufe als entsprechende Komponente von $\underline{U}_u$ im mit $\varphi^*$ umlaufenden Koordinatensystem abgegriffen, um durch Überlagerung mit dem Blindstrom-Sollwert $I_B^*$ (Fig. 12) den Betragssollwert $|U_1^*|$ zu bilden. Durch Vorgabe des Wirkstrom-Sollwertes $I_W^*$ dagegen kann die Komponente $|U_u|$ . $\sin\Delta\varphi$ bzw. $\Delta\varphi$ geregelt werden, wie Fig. 12 noch zeigen wird.

Die kartesische Arbeitsweise der Vektordreher 32' und 34' (Fig. 10) kann auch auf die Vektordreherstufen 32, 34 in Fig. 9 angewendet werden. Bei Betrachtung von Fig. 9 fällt jedoch auf, dass an den Additionsstellen 36 und 118 des Winkelsignals $\varphi^*$ jeweils mit entgegengesetztem Vorzeichen aufgeschaltet wird, so dass sie sich bei der Rückmodulation des Mitsystemvektors aus dem rotierenden Mitsystem in das raumfeste Bezugssystem und dem Regelvergleich für den Nachführregler 119 gegenseitig aufheben, während die Betragsamplitude bei den Koordinatentransformationen ohnehin invariant ist. Daher ist es möglich, die Mittel zur Nachführung des Winkelsignals in die zweite Vektordreherstufe 34 einzubebeziehen. Dies ist in Fig. 12 dargestellt, wo die beiden, sich gegenseitig aufhebenden Additionsstellen 36, 118 nur gestrichelt dargestellt sind. Die erste Vektordreherstufe 32 ist dabei durch einen Vektordreher 32a dargestellt, dessen Winkelsignaleingang mit dem Ausgang des polar-kartesischen Koordinatenwandlers 120 in Fig. 9 verbunden ist.

Das Multiplikationsglied 128 multipliziert das dem Winkel $\varphi^*$ entsprechende Winkelsignal, das die Komponenten des entsprechenden Einheitsvektors $\overline{\varphi}^*$ darstellt, mit dem an der Additionsstelle 117' abgegriffenen Sollbetrag $U^*_1$, um dadurch den Steuervektor $\underline{U}^*_1$ zu liefern, mit dem das Ausgangsspannungssystem des Stellgliedes 5 gestellt wird.

Mit 122 ist eine weitere Regel- und Steuereinrichtung bezeichnet, die als Sollwertgeber aus diesem Steuervektor die Stellsignale für die einzelnen Ausgangsgrössen des Stellgliedes 5 liefern.

Die Zuordnung des einzelnen Messwertes $U_u$ zu den orthogonalen Komponenten eines entsprechenden Istwertvektors $\underline{U}_u$, wie er für den Vektordreher 32a in Fig. 12 benötigt wird, geschieht dadurch, dass als die eine Istwert-Vektorkomponente direkt der Messwert selbst dem Vektordreher aufgeschaltet wird, während die andere Komponente über eine Verzögerungsschaltung 140 gewonnen wird, die den Messwert in seiner Phase um etwa 90° verschiebt. Eine derartige Anordnung ist in Fig. 13 dargestellt.

Zur Erzeugung der raumfesten $\beta$-Komponente des Istwertvektors wird dabei ein übliches Glättungsglied 150 verwendet, das z. B. aus der im Schaltsymbol angegebenen Schaltung bestehen kann. Ein derartiges Glättungsglied hat das Übertragungsverhalten $V_v/(1 + s \cdot T)$, wodurch einerseits die Amplitude um den Verstärkungsfaktor $V_v$ verzerrt, andererseits die Phase um einen bestimmten Winkel verschoben wird. Von der Ausgangsspannung des Glättungsgliedes wird der mit dem Faktor a multiplizierte (Multiplizierer 151) Messwert abgezogen und das Subtraktionsergebnis anschliessend mit dem Faktor $\underline{b}$ (Multiplizierer 152) multipliziert. Dadurch entsteht, wie dem in Fig. 13 gezeigten Vektordiagramm entnommen werden kann, ein um 90° verschobener Vektor, dessen Realteil gleich der $\beta$-Komponente des Vektors $\underline{U}$ ist, sofern die Faktoren $\underline{a}$ und $\underline{b}$ genau auf die jeweilige Frequenz des Messwertes $U_u$ abgestimmt sind.

Tatsächlich schwankt jedoch die Frequenz des Messwertes $U_u$ (d. h. die Netzfrequenz) stets etwas um ihren Nennwert, so dass die Phasenverschiebung nicht exakt 90° beträgt. Selbst wenn $U_u$ nur aus der harmonischen Grundschwingung besteht und an sich die $\alpha$-Komponente eines einen Kreis beschreibenden Vektors wäre, würde der dadurch erhaltene Vektor eine Ellipse beschreiben. Daher wird das Ausgangssignal dieser Verzögerungsschaltung nicht direkt dazu verwendet werden, um Phase und Amplitude des der harmonischen Schwingung zugeordneten Grundschwingungs

vektors zu erhalten, sondern es wird erst die Demodulation, Glättung und Rückmodulation vorgenommen, um dann mit dem Betragssignal und dem Winkelsignal die entsprechenden Bestimmungsgrössen dieser harmonischen Schwingung zu erhalten. Etwaige im Netz enthaltene Oberschwingungen werden dabei ebenfalls eliminiert.

Fig. 14 zeigt den ganzen Sollwertgeber, der wiederum aus der Verzögerungsschaltung 140, dem Vektordreher 32a, der Filterstufe 33', dem aus den Additionsstellen 117', 117″ bestehenden Additionsglied für die vektorielle Addition des durch $I_B^*$, $I_W^*$ bestimmten Zusatzvektors und der zweiten Vektordreherstufe besteht, in die die Mittel zum Erzeugen des Winkelsignals durch Nachführen des Ausgangssignals bauteilmässig so integriert sind, dass die zweite Vektordreherstufe praktisch nur noch aus dem Nachführregler 119, dem Vektoroszillator 101 und ggf. dem Multiplizierer 128 besteht. Die Schaltung wird ergänzt durch die Stellglieder 125 und 126 für den Wirkstromsollwert und den Blindstromsollwert sowie einen Umschalter 141, durch den der Regelkreis des Nachführreglers 119 unterbrochen werden kann, um die Sollfrequenz des Winkelsignals extern mittels eines Frequenz-Sollwertgebers 142 vorzugeben, anstelle sie aus dem Netz direkt abzuleiten. Diese Frequenzvorgabe ist für den Fall vorgesehen, dass mit dem Stellglied nicht synchron in ein bereits mit Sannung gespeistes Netz eingespeist werden soll, sondern nur die Netzspannung für isolierte Verbraucher ohne besondere Synchronisierung geliefert werden muss.

Wie bereits im Zusammenhang mit Fig. 11 erkennbar ist, kehrt sich bei einer Umkehr der Energieflussrichtung für den Wirkstrom das Vorzeichen des Winkels $\Delta\varphi^*$ um. Für eine derartige Richtungsumkehr ist bei der Schaltung nach Fig. 14 vorgesehen, mittels eines Schalters 143 die eine der von der Filterstufe 33 gelieferten Vektorkomponenten nicht mehr direkt auf die dem Eingang des Nachführreglers 119 vorgeschaltete Summationsstelle 117″ aufzuschalten, sondern zur Vorzeichenumkehr über ein entsprechendes Invertierglied 144. Ein entsprechender Schalter 145 mit einem Invertierglied 146 ist auch zwischen dem Ausgang der Verzögerungsschaltung 140 und der ersten Vektordreherstufe 32a vorgesehen. Für die erwähnte Energierichtungsumkehr ist am Ausgang des Sollwertgebers 125 für den Wirkleistungssollwert ein Hochlaufgeber 147 angeordnet, der bei einer Änderung der Wirkleistungsanforderung durch den Sollwertgeber 125 bewirkt, dass der Wirkleistungssollwert zunächst rampenförmig heruntergefahren wird, bis bei Unterschreiten eines Minimalbetrages das Stellglied abgeschaltet, d. h. der Energietransport vollständig unterbrochen wird. In der stromlosen Pause wird nunmehr die für die Energierichtungsumkehr notwendige Phasenumkehr (Betätigung der Schalter 143 und 145) vorgenommen. Anschliessend wird der Wirkleistungssollwert wieder rampenförmig hochgefahren, wobei bei Überschreitung eines Minimalbetrages das Stellglied wieder aktiviert wird.

## Patentansprüche

1. Verfahren zum Ermitteln der Grundschwingung eines Messwertes am Ausgang eines durch eine Führungsgrösse vorgegebener Sollfrequenz gesteuerten Stellgliedes, insbesondere eines Umrichters mit Drehstromausgang, gekennzeichnet durch folgende Merkmale:

a) durch ein mit der Sollfrequenz ($\omega$*) veränderliches Winkelsignal ($\varphi$*) wird in einem raumfesten Bezugssystem ein Bezugsvektor festgelegt, der eine Koordinatenachse eines mit der Winkelsignal-Frequenz in gegebenem Umlaufsinn rotierenden Koordinaten-Mitsystem ($\alpha'$, $\beta'$) bestimmt,

b) dem Messwert ($i_1$) wird im raumfesten Bezugssystem ein Istwert-Vektor (i) zugeordnet, der durch Demodulation des Messwertes mit dem Winkelsignal in einen zeitlich veränderlichen, bezüglich des Koordinaten-Mitsystems durch zwei demodulierte Messwertsignale ($i_{\alpha'}$, $i_{\beta'}$) erfassten Istwertvektor überführt wird,

c) aus den zeitlichen Mittelwerten ($\overline{i_{\alpha'}}$, $\overline{i_{\beta'}}$)der demodulierten Messwertsignale werden entsprechende auf das Koordinaten-Mitsystem bezogene Komponenten eines mit dem Koordinaten-Mitsystem bezogenen Mitsystem-Vektors gebildet, und

d) die auf das Koordinaten-Mitsystem bezogenen Mitsystem-Vektor-Komponenten werden mit dem Winkelsignal derart rückmoduliert, dass ein rückmoduliertes, eine raumfeste Komponente des Mitsystem-Vektors darstellendes Messwertsignal ($\overline{i'}$, $\overline{\varphi'}$) erhalten wird, dem Phase und Amplitude zugeordnet wird (Fig. 6).

2. Verfahren nach Anspruch 1, dadurch gekennzeichnet, dass der Istwert-Vektor (i) auch durch Demodulation mit dem Winkelsignal in einen zeitlich veränderlichen, bezüglich eines mit gleicher Frequenz und entgegengesetzt zum Koordinaten-Mitsystem umlaufenden Koordinaten-Gegensystem ($\alpha''$, $\beta''$) durch zwei weitere demodulierte Messwertsignale ($i_{\alpha''}$, $i_{\beta''}$) erfassten weiteren Istwertvektor überführt wird, dass auch aus den zeitlichen Mittelwerten der weiteren demodulierten Messwertsignale entsprechende, auf das Koordinaten-Gegensystem bezogene Komponenten eines mit dem Koordinaten-Gegensystem rotierenden Gegensystem-Vektors $\overline{i''}$) gebildet werden, dass auch die zeitlichen Mittelwerte der weiteren demodulierten Messwertsignale derart rückmoduliert werden, dass ein eine raumfeste Komponente des Gegensystem-Vektors darstellendes weiteres rückmoduliertes Messwertsignal erhalten wird, und dass die beiden rückmodulierten Messwertsignale zu einem eine Komponente eines resultierenden Vektors ($\overline{i_1}$) darstellenden elektrischen Signal addiert werden, dem Amplitude und Phase der Grundschwingung zugeordnet werden (Fig. 7).

3. Verfahren nach Anspruch 2 für ein nullkomponentenfreies System aus drei Messwerten ($i_1$, $i_2$, $i_3$), dadurch gekennzeichnet, dass der Istwertvektor dem nullkomponentenfreien Messwertsystem zugeordnet wird und die zeitlichen Mittelwerte der weiteren demodulierten Messwertsignale dadurch gebildet werden, dass die auf das Koordinaten-Gegensystem bezogenen Komponenten der vektoriellen Differenz ($\underline{i} - \overline{i'}$) aus Istwert-Vektor ($\underline{i}$) und Mitsystem-Vektor ($\overline{i'}$) gemittelt werden (Fig. 8).

4. Verfahren nach Anspruch 2 für ein nullkomponentenfreies System aus drei Messwerten, dadurch gekennzeichnet, dass der Istwertvektor dem nullkomponentenfreien Messwertsystem zugeordnet wird und die zeitlichen Mittelwerte der weiteren demodulierten Messwertsignale dadurch erhalten werden, dass die auf das Koordinaten-Gegensystem bezogenen Komponenten der vektoriellen Differenz ($\underline{i} - \underline{i}$*) aus Istwert-Vektor und einem mit der Sollfrequenz umlaufenden Sollwert-Vektor ($\underline{i}$*) gemittelt werden (Fig. 8)

5. Verfahren nach einem der Ansprüche 1 bis 4 mit Bildung eines um eine vorgegebene Winkeldifferenz gegenüber der Grundschwingung des Messwertes phasenverschobenen Messwertsignals, dadurch gekennzeichnet, dass durch Nachführung der Winkelsignal-Frequenz und/oder der Sollfrequenz die Phasendifferenz zwischen dem Winkelsignal und dem Messwertsignal auf einen der vorgegebenen Winkeldifferenz entsprechenden Sollwert eingeregelt wird (Fig. 9).

6. Anwendung des Verfahrens nach einem der Ansprüche 1 bis 4 zur Bildung der Umschaltsignale für das stromflussrichtungsabhängige Umschalten zwischen antiparallelen, auf einen gemeinsamen Umrichterausgang mit angeschlossener Last arbeitenden Umrichterbrücken eines Direktumrichters (5), insbesondere eines Direktumrichters mit Drehstromausgang, indem aus dem Messwert des Stromes ($\underline{i}$) am Umrichterausgang das der Stromgrundschwingung ($\overline{i}$) zugeordnete Messwertsignal gebildet wird, bei dessen Nulldurchgängen zwischen den antiparallelen Umrichterbrücken umgeschaltet wird (Fig. 5 und 8).

7. Anwendung des Verfahrens nach einem der Ansprüche 1 bis 5 zum Bilden einer Steuergrösse für ein Stellglied zur Stromeinspeisung in ein elektrisches Versorgungsnetz, dadurch gekennzeichnet, dass der Mitsystem-Vektor aus den Mittelwerten der demodulierten Messwertsignale ($U_{\alpha'}$, $U_{\beta'}$) und Sollwerten für den einzuspeisenden Wirk- und Blindstrom entsprechend der Vektorsumme des durch die Mittelwerte bestimmten Vektors und eines durch die Sollwerte bestimmten Zusatzvektors ($\Delta U$*) gebildet wird, und dass die durch die Rückmodulation gelieferte Schwingung als Steuergrösse für das Stellglied abgegriffen wird (Fig. 9).

8. Anwendung nach Anspruch 7 zum Bilden eines symmetrischen Systems ($\underline{U}$*$_1$) von drei Steuergrössen für ein Stellglied mit Drehstromausgang und ein einphasiges Versorgungsnetz, wobei der Drehstromausgang mittels einer Symmetriereinrichtung an ein einphasiges Netz angeschlossen ist, dadurch gekennzeichnet, dass die eine raumfeste Komponente des Istwertvektors durch die Netzspannung ($U_u$) und die andere Komponente des Istwertvektors durch die um etwa 90° phasenverschobene Netzspannung gebildet wird, dass als Amplitude des Systems der Steuergrössen die Betragskomponente des rückmodulierten Mitsystemvektors gebildet wird aus der Summe des Mittelwertes eines der demodulierten Messwertsignale und einer dem Blindstrom-Sollwert ($I_B$*) entsprechenden Grösse, dass als gewünschte Phasenbeziehung zwischen dem Messwert und dem Messwertsignal eine dem Wirkstromsollwert ($I$*$_w$) entsprechende Grösse vorgegeben wird, dass als Winkelkomponente des rückmodulierten Mitsystem-Vektors die Phase ($\varphi$*) des nachgeführten Winkelsignals verwendet wird, und dass Betrag ($|U_i|$) und Phase ($\varphi$*) des rückmodulierten Mitsystem-Vektors zur Bestimmung von Betrag und Phase des Systems der Steuergrössen ($\underline{U}_1$*) verwendet wird (Fig. 12).

9. Vorrichtung zur Durchführung des Verfahrens nach Anspruch 1, mit folgenden Merkmalen:

a) Mittel (119, 121 bis 127) zur Bildung eines entsprechend der Sollfrequenz ($\omega$*) frequenzveränderlichen Winkelsignals ($\varphi$*), das in einem raumfesten Bezugssystem einen Bezugsvektor ($\underline{\varphi}$*) festlegt, der mit der Winkelsignal-Frequenz in gegebenem Umlaufsinn rotiert und eine Koordinatenachse des rotierenden orthogonalen Koordinaten-Mitsystems bestimmt,

b) eine erste Vektordreherstufe (32'), die den Messwert ($\underline{U}_u$) derart mit dem Winkelsignal ($\varphi$*) demoduliert, dass zwei im Koordinaten-Mitsystem die Komponenten eines zeitlich veränderlichen Istwert-Vektors ($\underline{U}_u$) darstellende demodulierte Messwertsignale erhalten werden, wobei die Komponenten des Istwert-Vektors im raumfesten Bezugssystem aus dem momentanen Istwert durch eine erste Zuordnungsschaltung (8) gewinnbar sind,

c) eine Filterstufe (33'), die den zeitlichen Mittelwerten der demodulierten Messwertsignale entsprechende auf das Koordinaten-Mitsystem bezogene Komponenten eines mit dem Koordinaten-Mitsystem rotierenden Mitsystem-Vektors bildet, und

d) eine zweite Vektordreherstufe (34'), die die zeitlichen Mittelwerte der demodulierten Messwertsignale derart rückmoduliert, dass ein rückmoduliertes, eine raumfeste Komponente des Mitsystem-Vektors darstellendes Messwertsignal erhalten wird, wobei diese Komponente durch eine invers zur ersten Zuordnungsschaltung arbeitende zweite Zuordnungsschaltung (120') der Grundschwingung zugeordnet wird (Fig. 10).

10. Vorrichtung nach Anspruch 9, dadurch gekennzeichnet, dass die erste Vektordreherstufe (32) einen ersten, dem Mitsystem zugeordneten Vektordreher (32'), der die raumfeste Komponente ($i_\alpha$) des Messwert-Vektors ($i_\alpha$, $i_\beta$) in dessen Mitsystem-Komponenten ($i_{\alpha'}$, $i_{\beta'}$) umrechnet, und einen ersten, einem gegensinnig zum Koordinaten-Mitsystem umlaufenden orthogonalen Koordinaten-Gegensystem zugeordneten Vektordreher (32'') enthält, der die raumfeste Komponente ($i_\alpha$) des Istwert-Vektors in dessen Komponenten ($i_{\alpha''}$, $i_{\beta'}$) bezüglich des Koordinaten-Gegensystems umrechnet, dass die Filterstufe (33) für jede Komponente des Istwert-Vektors bezüglich des Koordinaten-Mitsystems und des Koordinaten-Gegensystems je einen Integrator oder einen Filter zur Bildung der zeitlichen Mittelwerte dieser Komponenten enthält, und dass die zweite Vektordrehstufe (34) einen zweiten, dem Mitsystem zugeordneten Vektordreher (34'), der den durch die zeitlichen Mittelwerte der auf das Mitsystem bezogenen Komponenten bestimmten Mitsystem-Vektor ($\overline{\underline{i'}}$) in dessen raumfeste Komponenten umrechnet, einen zweiten, dem Gegensystem zugeordneten Vektordreher (34''), der den durch die zeitlichen Mittelwerte der auf das Gegensystem bezogenen Komponenten bestimmten Gegensystem-Vektor ($\overline{\underline{i''}}$) in dessen raumfeste Komponenten umrechnet, und ein Additionsglied (37) zur komponentenweisen Addition des Mitsystem-Vektors und des Gegensystem-Vektors enthält (Fig. 7).

11. Vorrichtung nach Anspruch 10, dadurch gekennzeichnet, dass dem ersten dem Gegensystem zugeordneten Vektordreher (32'') ein Subtraktionsglied (41) vorgeschaltet ist zur komponentenweisen Subtraktion des Mitsystem-Vektors ($\underline{i'}$) vom Istwert-Vektor ($\underline{i}$) (Fig. 8).

12. Vorrichtung nach Anspruch 10, dadurch gekennzeichnet, dass dem ersten dem Gegensystem zugeordneten Vektordreher (32'') ein Subtraktionsglied (41) vorgeschaltet ist zur komponentenweisen Subtraktion eines mit der Sollfrequenz umlaufenden Sollwert-Vektors ($\underline{i}$*) vom Istwert-Vektor ($\underline{i}$) (Fig. 8).

13. Vorrichtung nach einem der Ansprüche 9 bis 12, dadurch gekennzeichnet, dass die Mittel zur Bildung des Winkelsignals einen Nachführregler (119), dem als Istwert die tatsächliche Phasendifferenz ($\Delta\varphi$) und als Sollwert die gewünschte Phasendifferenz ($\Delta\varphi$*) zwischen dem Winkelsignal und der Grundschwingung zugeführt sind, und einen nachgeschalteten Integrator (125) enthalten, von dem die Phase des Winkelsignals abgreifbar ist (Fig. 10).

14. Vorrichtung nach Anspruch 13, dadurch gekennzeichnet, dass die Zuordnungsschaltung aus einem Spannungsmessglied (116) und einem mit dem Messwert-Ausgang des Messgliedes verbundenen Verzögerungsglied (140) besteht, und dass der Ausgang des Messgliedes und des Verzögerungsgliedes auf die Vektorsignaleingänge eines als erste Vektordreherstufe dienenden Vektordrehers (32a) aufgeschaltet sind (Fig. 12).

15. Vorrichtung nach Anspruch 14, dadurch gekennzeichnet, dass der Nachführregler (119) und der Integrator (29) Bestandteile der zweiten Vektordreherstufe sind (Fig. 12).

16. Vorrichtung nach Anspruch 14 und 15, dadurch gekennzeichnet, dass die Filterstufe (33') für jeden Ausgang des ersten Vektordrehers ein Tiefpassfilter enthält, zum Ausgangssignal des einen Tiefpassfilters ein Blindstrom-Sollwert addiert ist (Additionsstelle 117') und die Summe als Sollamplitude einem Spannungsstellglied (5) mit Drehspannungsausgang zugeführt ist, dass zum Ausgangssignal des zweiten Tiefpassfilters ein Wirkstrom-Sollwert addiert (Additionsstelle 117'') und die Summe dem Nachführregler (119) aufgeschaltet ist, und dass als Integrator ein Vektoroszillator (29, 120) verwendet ist, dessen Ausgangssignal einerseits dem Winkelsignaleingang des Vektordrehers (32a), andererseits als Sollphase dem Spannungsstellglied (5) zugeführt ist, und dass dem Spannungsstellglied eine Symmetriereinrichtung (122) und parallel dazu zwischen zwei der drei Drehspannungsausgänge Mittel zur Einspeisung ein einphasiges Wechselspannungsnetz nachgeschaltet sind (Fig. 12 und 14).

17. Vorrichtung nach Anspruch 16, dadurch gekennzeichnet, dass zur Umkehrung der Energieflussrichtung des Wirkstromes dem Vektordreher am Vektorsignaleingang für die eine Komponente und dem Reglereingang ein Invertierer (144, 146) vorschaltbar ist (Fig. 14).

18. Vorrichtung nach Anspruch 17, gekennzeichnet durch einen Hochlaufgeber (147), der bei Umkehrung der Energieflussrichtung dem Winkelstromsollwert kontinuierlich auf Null steuert, bei Unterschreiten eines Minimalwertes das Stellglied abschaltet und einen Schaltbefehl zur Vorschaltung der Invertierglieder abgibt und anschliessend den Sollwert auf den zur umgekehrten Energieflussrichtung gehörenden Sollwert kontinuierlich hochfährt.

**Claims**

1. A method of determining the fundamental oscillation of a measured value at the output of an adjusting element controlled by a guide-variable of a predetermined theoretical frequency, in particular for an inverter with a three-phase output, characterised by the following features:

a) a reference vector is determined by an angular signal $(\varphi^*)$ changed by the theoretical frequency $(\omega^*)$ in a stationary reference system, which reference vector determines a coordinate axis of a coordinate co-system $(\alpha', \beta')$ which rotates at the angular signal frequency in the given sense of rotation;

b) in the stationary reference system the measured value $(i_1)$ is assigned an actual value vector (i) which is transferred into an actual value vector variable with time by demodulation of the measured value using the angular signal and detected by two demodulated measured value signals $(i_{\alpha'}, i_{\beta'})$ in respect of the coordinate co-system;

c) corresponding components of a co-system vector related to the coordinate co-system and rotating with the coordinate co-system, are formed from the mean time values $(\bar{i}_\alpha', \bar{i}_\beta')$ of the demodulated measured value signals; and

d) the components of the co-system vector related to the coordinate co-system, are remodulated by means of the angular signal, in such a manner that a remodulated measured value signal $(\bar{i}', \bar{\varphi}')$ is obtained which represents a stationary component of the co-system vector, to which phase and amplitude are assigned (Fig. 6).

2. A method as claimed in claim 1, characterised in that by demodulation using the angular signal the actual value vector (i) is transferred into a further actual value vector variable with time and in respect of a coordinate counter-system $(\alpha'', \beta'')$, which rotates at the same frequency and in opposition to the coordinate co-system, detected by two further demodulated measured value signals $(i_{\alpha''}, i_{\beta''})$; that components related to the coordinate counter-system, of a counter-system vector $(\bar{i}'')$ which rotates with the coordinate counter-system, are formed from the mean time values of the further demodulated measured value signals; that the mean time values of the further demodulated measured value signals are remodulated in such a manner that a further remodulated measured value signal which represents a stationary component of the counter-system, is obtained; and that the two remodulated measured value signals are added to an electric signal which represents a component of a resulting vector $(\bar{i}_1)$ and to which amplitude and phase of the fundamental oscillation are assigned (fig. 7).

3. A method as claimed in claim 2, for a system free from zero-components and consisting of three measured values $(i_1, i_2, i_3)$, characterised in that the actual value vector is assigned to the measured value system free from zero-components, and the mean time values of the further demodulated measured value signals are formed in that the components related to the coordinate counter-system of the vectorial difference $(\underline{i} - \bar{i}')$ from the actual value vector $(\underline{i})$ and the co-system vector $(\bar{i}')$ are averaged (fig. 8).

4. A method as claimed in claim 2, for a system free from zero-components and consisting of three measured values, characterised in that the actual value vector is assigned to the measured value system free from zero-components and the mean time values of the further demodulated measured value signals are obtained in that the components related to the coordinate counter-system, of the vectorial difference $(\underline{i} - \underline{i}^*)$ between the actual value vector and a theoretical value vector $(\underline{i}^*)$, which rotates at the theoretical frequency, are averaged (fig. 8).

5. A method as claimed in one of claims 1 to 4, with the formation of a measured value signal phase-shifted in relation to the fundamental oscillation by a predetermined angular difference, characterised in that to follow up the angular signal frequency and/or the theoretical frequency the phase difference between the angular signal and the measured value signal is regulated to a theoretical value which corresponds to the predetermined angular difference (fig. 9).

6. Use of the method as claimed in one of claims 1 to 4, for the formation of the change-over signals for the change-over between anti-parallel inverter bridges of a direct inverter (5) dependent upon the flow direction of the current, in particular of a direct inverter with a three-phase output, which inverter bridges operate on a common inverter output with connected load, in that the measured value signal assigned to the fundamental current oscillation $(\bar{i})$ is formed from the measured value of the current (i) at the inverter output, at the zero transits of which measured value signal switching takes place between the anti-parallel inverter bridges (fig. 5 and 8).

7. Use of the method as claimed in one of claims 1 to 5, for the formation of a control variable for an adjusting element in order to feed current into an electric supply network, characterised in that the co-system vector is formed from the average values of the demodulated measured value signals $(U_{\alpha'}, U_{\beta'})$ and theoretical values for the active and idle current to be fed, in accordance with the vector sum of the vector, determined by the average values, and an additional vector $(\Delta U^*)$ determined by the theoretical values, and that the oscillation supplied as a result of the remodulation is tapped as a control variable for the adjusting element (fig. 9).

8. Use as claimed in claim 7, for the formation of a symmetrical system $(\underline{U}^*_1)$ of three control variables for an adjusting element with three-phase output and a single-phase supply network, where the three-phase output is connected to a single-phase network by means of a symmetrization device, characterised in that the one stationary component of the actual value vector is formed by the mains voltage $(U_u)$ and the other component of the actual value vector is formed by the mains voltage phase-shifted by approximately 90°, and that the amount component of the remodulated co-system vector is formed the sum of the average values of one of the demodulated measured value signals and a magnitude corresponding to te theoretical value $(I_B^*)$ of the idle current as amplitude of the system of the control variables, and that a magnitude corresponding to the theoretical value $(I_W^*)$ of the idle current is determined as required phase ratio between the measured value and the measured value signal, and that the phase $(\varphi^*)$ of the followed-up angular signal is used as angular component of the remodulated co-system vector, and that magnitude $(|U_1^*|)$ and phase $(\varphi^*)$ of the remodulated co-system vector are used for determining magnitude and phase of the system of the control variables $(\underline{U}_1^*)$ (fig. 12).

9. A device for the implementation of the method as claimed in claim 1, having the following features:

a) means (119, 121 to 127) for the formation of an angular signal $(\varphi^*)$ whose frequency is changed in accordance with the theoretical frequency $(\omega^*)$ and which in a stationary reference system determines a reference vector $(\varphi^*)$ which at the angular signal frequency rotates in the given sense of rotation and determines a coordinate axis of the rotating orthogonal coordinate co-system;

b) a first vector rotator stage (32') which demodulates the measured value $(\underline{U}_u)$ by means of the angular signal $(\dot{\varphi}^*)$ in such manner that two demodulated measured value signals are obtained which in the coordinate co-system represent the components of an actual value vector $(\underline{U}_u)$ which changes with time, where the components of the actual value vector in the stationary reference system can be obtained from the instantaneous actual value by means of a first assignment circuit (8);

c) a filter stage (33') which forms components, which correspond to the mean time values of the demodulated measured value signals and are related to the coordinate co-system, of a co-system vector which rotates with the coordinate co-system; and

d) a second vector rotator stage (34') which remodulates the mean time values of the demodulated measured value signals in such a manner that a remodulated measured value signal which represents a stationary component of the co-system vector is obtained, where said component is assigned to the fundamental oscillation by means of a second assignment circuit (120') which operates inversely to the first assignment circuit (fig. 10).

10. A device as claimed in claim 9, characterised in that the first vector rotator stage (32) comprises a first vector rotator (32') assigned to the co-system for converting the stationary component $(i_\alpha)$ of the measured value vector $(i_\alpha, i_\beta)$ into the co-system components $(i_{\alpha'}, i_{\beta'})$ thereof, and comprises a first vector rotator (32'') which rotates inversely to the coordinate co-system and is assigned to an orthogonal coordinate counter-system and converts the stationary component $(i_\alpha)$ of the actual value vector into the components $(i_{\alpha''}, i_{\beta''})$ thereof in respect of the coordinate countersystem; that the filter stage (33) for each component of the actual value vector in respect of the coordinate co-system, and of the coordinate counter-system respectively, comprise an integrator or a filter for the formation of the mean time values of said components; and that the second vector rotating stage (34) comprises a second vector rotator (34') assigned to the co-system which converts the co-system vector $(\underline{i}')$ determined by the mean time values of the components related to the co-system into stationary components thereof, and comprises a second vector rotator (34'') assigned to the counter-system which converts the counter-system vector $(i'')$ determined by the mean time values of the components related to the counter-system into stationary components thereof, and comprises an addition element (37) for the component-wise addition of the co-system vector and the counter-system vector (fig. 7).

11. A device as claimed in claim 10, characterised in that the first vector rotator (32'') to the counter-system is preceded by a subtraction element (41) for the component-wise subtraction of the co-system vector $(\underline{i}')$ from the actual value vector $(\underline{i})$ (fig. 8).

12. A device as claimed in claim 10, characterised in that the first vector rotator (32'') assigned to the counter-system is preceded by a subtraction element (41) for the component-wise subtraction of a theoretical value vector $(\underline{i}^*)$ circulating at the theoretical frequency from the actual value vector $(\underline{i})$ (fig. 8).

13. A device as claimed in one of claims 9 to 12, characterised in that the means for the formation of the angular signals comprise a follow-up regulator (119), to which the actual phase difference $(\Delta\varphi)$ is fed as an actual value and the required phase difference $(\Delta\varphi^*)$ between the angular sig-

nal and the fundamental oscillation as a theoretical value, and comprise a following integrator (125), from which the phase of the angular signal can be tapped (fig. 10).

14. A device as claimed in claim 13, characterised in that the assignment circuit consists of a voltage measuring element (116) and a delay element (140) connected to the measured value output of the measuring element, and that the output of the measuring element and of the delay element are switched to the vector signal inputs of a vector rotator (32a) which serves as a first vector rotator stage (fig. 12).

15. A device as claimed in claim 14, characterised in that the follow-up regulator (119) and the integrator (29) are components of the second vector rotator stage (fig. 12).

16. A device as claimed in claim 14 and 15, characterised in that for each output of the first vector rotator the filter stage (33') comprises a low-pass filter, an idle current theoretical value is added to the output signal of the one low-pass filter (addition point 117') and the sum is fed to a voltage adjusting element (5) with a rotary voltage output, as a theoretical amplitude, that an active value theoretical value is added to the output signal of the second low-pass filter (addition point 117") and the sum is fed to the follow-up regulator (119), and that a vector oscillator (29, 120) is used as an integrator, whose output signal is fed to the input of the angular signal of the vector rotator (32a), and to the voltage adjusting element (5) as a theoretical phase, and that the voltage adjusting element is followed by a summatrization device (122) and parallel thereto between two of the three rotary voltage outputs followed by means for feeding a single-phase alternating voltage network (fig. 12 and 14).

17. A device as claimed in claim 16, characterised in that to invert the flow direction of the energy of the active current the vector rotator is preceded by an inverter (144, 146) at the vector signal input for the one component and the regulator input (fig. 14).

18. A device as claimed in claim 17, characterised by a run-up generator (147) which in the event of invertion of the flow direction of the energy continuously controls the active current theoretical value to zero, and in the event of undershooting a minimal value switches off the adjusting element and emits a switching instruction for preceding inverting elements and then continuously runs up the theoretical value to the theoretical value assigned to the inverted energy flow direction.

**Revendications**

1. Procédé pour déterminer l'oscillation fondamentale d'une valeur de mesure à la sortie d'un organe de réglage commandé par une grandeur pilote possédant une fréquence de consigne prédéterminée, notamment un convertisseur comportant une sortie en courant triphasé, caractérisé par les particularités suivantes:

a) au moyen d'un signal angulaire ($\omega^*$) variable avec la fréquence de consigne ($\varphi^*$), on détermine dans un système fixe de référence un vecteur de référence qui détermine un axe de coordonnées d'un système direct de coordonnées ($\alpha'$, $\beta'$) tournant avec la fréquence du signal angulaire dans un sens de rotation donné,

b) dans le système fixe de référence, on associe à la valeur de mesure ($i_1$) un vecteur de valeur réelle ($\underline{i}$) qui est transformé par démodulation de la valeur de mesure avec le signal angulaire en un vecteur de la valeur réelle, variable dans le temps et déterminé par rapport au système direct de coordonnées par deux signaux de valeurs de mesure démodulés ($i_{\alpha'}$, $i_{\beta'}$),

c) à partir des valeurs moyennes dans le temps ($\bar{i}_{\alpha'}$, $\bar{i}_{\beta'}$) des signaux des valeurs de mesure démodulés, on forme des composantes rapportées au système direct de coordonnées, d'un vecteur du système direct tournant avec le système direct de coordonnées, et

d) les composantes du vecteur du système direct, qui sont rapportées au système direct de coordonnées, subissent une modulation inverse au moyen du signal angulaire de telle sorte que l'on obtient un signal de la valeur de mesure ($\bar{i}'$, $\bar{\varphi}'$) modulé en retour, représentant une composante fixe dans l'espace du vecteur du système direct et auquel sont associées une phase et une amplitude (fig. 6).

2. Procédé suivant la revendication 1, caractérisé par le fait le vecteur ($\underline{i}$) de la valeur réelle est également transformé, par démodulation avec le signal angulaire, en un autre vecteur de valeur réelle variable dans le temps, déterminé par deux autres signaux de valeurs de mesure démodulés ($i_{\alpha''}$, $i_{\beta''}$) par rapport à un système inverse de coordonnées ($\alpha''$, $\beta''$) tournant avec la même fréquence et en sens opposé du système direct de coordonnées, qu'on forme également à partir des valeurs moyennes dans le temps des autres signaux de valeurs de mesure modulés des composantes correspondantes, rapportées au système inverse de coordonnées, d'un vecteur du système inverse ($\bar{i}''$) tournant avec le système inverse de coordonnées, que également les valeurs moyennes dans le temps des autres signaux de valeurs de mesure démodulés par une modulation en retour de telle sorte que l'on obtient un autre signal de la valeur de mesure, modulé en retour et représentant une composante fixe dans l'espace, du vecteur du système inverse, et que les deux signaux de valeurs de mesure modulés en retour sont ajoutés à un signal électrique représentant une composante du vecteur résultant ($\bar{i}_1$), auquel sont associées l'amplitude et la phase de l'oscillation fondamentale (fig. 7).

3. Procédé suivant la revendication 2, pour un système composante nulle, formé de trois valeurs de mesure ($i_1$, $i_2$, $i_3$), caractérisé par le fait que le vecteur de la valeur réelle est associé au système de valeurs de mesure sans composante nulle et que les valeurs moyennes dans le temps des autres signaux de valeur de mesure démodulés sont formés grâce au fait que les composantes, rapportées au système inverse de coordonnées, de la différence vectorielle $(\underline{i}-\underline{\overline{i}'})$, sont déterminées à partir du vecteur de la valeur réelle $(\underline{i})$ et du vecteur du système direct $(\underline{\overline{i}'})$ (fig. 8).

4. Procédé suivant la revendication 2 pour un système sans composante nulle, formé de trois valeurs de mesure, caractérisé par le fait que le vecteur de la valeur réelle est associé au système de valeur de mesure exempt de composante nulle et que les valeurs moyennes dans le temps des autres signaux de valeur de mesure démodulés sont obtenus par le fait que les composantes, rapportées au système inverse de coordonnées, de la différence vectorielle $(\underline{i}-\underline{i^*})$ sont déterminées à partir du vecteur de la valeur réelle et d'un vecteur de la valeur de consigne $(\underline{i^*})$ tournant avec la fréquence de consigne (fig. 8).

5. Procédé suivant l'une des revendications 1 à 4, avec formation d'un signal de valeur de mesure déphasé d'une différence angulaire prédéterminée par rapport à l'oscillation fondamentale de la valeur de mesure, caractérisé par le fait que grâce à une simulation de la fréquence du signal angulaire et/ou de la fréquence de consigne, la différence de phase entre le signal angulaire et le signal de la valeur de mesure est réglée à une valeur de consigne correspondant à la différence angulaire prédéterminée (fig. 9).

6. Utilisation du procédé suivant l'une des revendications 1 à 4, pour la formation des signaux de commutation pour la commutation, dépendant du sens du flux de courant, entre des ponts d'un convertisseur direct (5), notamment d'un convertisseur direct à sortie à courant triphasé antiparallèles et opérant sur une sortie commune du convertisseur à laquelle est raccordée une charge remarquable en ce qu'on forme à partir de la valeur de mesure du courant (i) présent sur la sortie du convertisseur le signal de valeur de mesure associé à l'oscillation fondamentale de courant $(\overline{i})$ et lors des annulations duquel une commutation a été exécutée entre les ponts antiparallèles du convertisseur (fig. 5 plus fig. 8).

7. Utilisation du procédé suivant l'une des revendications 1 à 5 pour la formation d'une grandeur de commande pour un organe de réglage pour l'injection de courant dans un réseau d'alimentation électrique, caractérisé par le fait que le vecteur du système direct est formé à partir des valeurs moyennes des signaux de valeurs de mesure démodulés $(U_{\alpha'}, U_{\beta)}$ et à partir des valeurs de consigne pour le courant actif et le courant réactif devant être injectés, conformément à la somme vectorielle du vecteur déterminé par les valeurs moyennes et d'un vecteur additionnel $(\Delta U^*)$ déterminé par les valeurs de consigne, et que l'oscillation délivrée par la modulation en retour est prélevée sous la forme d'une grandeur de commande pour l'organe de réglage (fig. 9).

8. Utilisation suivant la revendication 7, pour la formation d'un système symétrique $(\underline{U^*}_1)$ de trois grandeurs de mesure pour un organe de réglage comportant une sortie à courant triphasé et pour un réseau d'alimentation monophasé, la sortie à courant triphasé étant raccordée au moyen d'un dispositif de symétrisation à un réseau monophasé, caractérisé par le fait qu'une composante, fixe dans l'espace, du vecteur de la valeur réelle est formée par la tension du réseau $(U_u)$ et que l'autre composante du vecteur de la valeur réelle est formée par la tension du réseau déphasé d'environ 90°, que l'on forme, comme amplitude du système des grandeurs de commande, la composante de valeur du vecteur du système direct, modulé en retour, à partir de la somme de la valeur moyenne de l'une des signaux de valeur de mesure démodulés et d'une grandeur correspondant à la valeur de consigne $(I^*_B)$ du courant réactif, que l'on présélectionne une grandeur correspondant à la valeur de consigne $(I''_W)$ du courant réactif, en tant que relation de phase désirée entre la valeur de mesure et le signal de la valeur de mesure, qu'on utilise comme composante angulaire du vecteur du système direct, modulé en retour, la phase $(\varphi^*)$ du signal angulaire asservi et qu'on utilise la phase $(|U''_1|)$ et la phase $(\varphi^*)$ du vecteur du système direct, modulé en retour, pour déterminer la valeur et la phase du système des grandeurs de commande $(\underline{U^*}_1)$ (fig. 2).

9. Dispositif pour la mise en oeuvre du procédé suivant la revendication 1, comportant les caractéristiques suivantes:

a) des moyens (119, 121, 127) pour former un signal angulaire $(\varphi^*)$, dont la fréquence varie en fonction de la fréquence de consigne $(\omega^*)$ et qui détermine, dans un système de référence fixe dans l'espace, un vecteur de référence $(\varphi^*)$, qui tourne avec un sens de rotation donné à la fréquence du signal angulaire, et détermine un axe ce coordonnées du système direct orthogonal rotatif de coordonnées.

b) un premier étage de rotation vectorielle (32'), qui démodule la valeur de mesure $(\underline{U}_u)$ au moyen du signal angulaire $(\varphi^*)$ de telle sorte que l'on obtient deux signaux de la valeur de mesure démodulés représentant, dans le système direct de coordonnées, les composantes d'un vecteur de la valeur réelle $(\underline{U}_u)$ variable dans le temps, les composantes du vecteur de la valeur réelle dans le système de référence fixe dans l'espace pouvant être obtenues à partir de la valeur réelle instantanée au moyen d'un premier circuit d'affectation (8),

c) un étage de filtre (33'), qui forme les composantes, correspondant aux valeurs moyennes dans le temps des signaux de valeur de mesure démodulées et rapportées au système direct de coordonnées, d'un vecteur du système direct tournant avec le système direct de coordonnées et

d) un second étage de rotation vectorielle (34'), qui module en retour les valeurs moyennes dans le temps des signaux démodulés des valeurs de mesure de telle sorte que l'on obtient un signal de valeur de mesure modulé en retour et représentant une composante, fixe dans l'espace, du vecteur du système direct, cette composante étant associée à l'oscillation fondamentale par un second circuit d'affectation (120') opérant à l'inverse du premier circuit d'affectation (fig. 10).

10. Dispositif suivant la revendication 9, caractérisé par le fait que le premier étage de rotation vectorielle (32) contient un premier dispositif de rotation vectorielle (32'), qui est associé au système direct et convertit la composante $(i_\alpha)$, fixe dans l'epace, du vecteur de la valeur de mesure $(i_\alpha, i_\beta)$, en ses composantes $(i_{\alpha'})$, $i_{\beta'})$ dans le système direct, et un premier dispositif de rotation vectorielle (32'') associé à un système orthogonal inverse de coordonnées tournant en sens opposé du système direct de coordonnés et qui convertit la composante $(i_\alpha)$, fixe dans l'espace, du vecteur de la valeur réelle en ces composantes $(i_\alpha, i_\beta)$ par rapport au système inverse de coordonnées, que l'étage de filtre (33) pour chaque composante du vecteur de la valeur réelle par rapport au système direct de coordonnées et au système inverse de coordonnées contient respectivement un intégrateur ou un filtre pour la formation des valeurs moyennes dans le temps de ces composantes, et que le second étage de rotation vectorielle (34) contient un second dispositif de rotation vectorielle (34'), qui est associé au système direct et qui convertit le vecteur du système direct ($\overline{i'}$) déterminé par les valeurs moyennes dans le temps des composantes rapportées au système direct, en ses composantes fixes dans l'espace, un second dispositif de rotation vectorielle (34''), qui est associé au système inverse et qui convertit le vecteur du système inverse ($\overline{i''}$) déterminé par les valeurs moyennes dans le temps des composantes rapportées au système inverse en ses composantes fixes dans l'espace, et un circuit additionneur (37) servent à réaliser l'addition, composante par composante, du vecteur du système direct et du vecteur du système inverse (fig. 7).

11. Dispositif suivant la revendication 10, caractérisé par le fait qu'en amont du premier dispositif de rotation vectorielle (32''), qui est associé au système inverse, se trouve branché un circuit soustracteur (41) servant à soustraire, composante par composante, le vecteur ($\overline{i'}$) de la valeur réelle du vecteur de la valeur réelle ($\overline{i}$) (fig. 8).

12. Dispositif suivant la revendication 10, caractérisé par le fait qu'en amont du premier dispositif de rotation vectorielle (32'') associé au système inverse se trouve monté un circuit soustracteur (41) servant à réaliser la soustraction, composante par composante, d'un vecteur ($\overline{i^*}$) de la valeur de consigne, tournant avec la fréquence de consigne, du vecteur ($\overline{i}$) de la valeur réelle (fig. 8).

13. Dispositif suivant l'une des revendications 9 à 12, caractérisé par le fait que les moyens servant à former le signal angulaire contiennent un régulateur d'asservissement (119), auquel sont envoyées en tant que valeur réelle, la différence de phase effective $(\Delta\varphi)$ et en tant que valeur de consigne, la différence de phase désirée $(\Delta\varphi^*)$ entre le signal angulaire et l'oscillation fondamentale, et un intégrateur (125) branché en aval et dont on peut prélever la phase du signal angulaire (fig. 10).

14. Dispositif suivant la revendication 13, caractérisé par le fait que le circuit d'affectation est constitué par un organe (116) de mesure de la tension et par un ligne à retard (140) reliée à la sortie de la valeur de mesure de l'organe de mesure, et que la sortie de l'organe de mesure et de la ligne à retard sont raccordées aux entrées des signaux des vecteurs d'un dispositif de rotation vectorielle (32a) utilisé en tant que premier étage de rotation vectorielle (fig. 12).

15. Dispositif suivant la revendication 14, caractérisé par le fait que le régulateur d'asservissement (119) et l'intégrateur) (29) font partie du second étage de rotation vectorielle (fig. 12).

16. Dispositif suivant la revendication 14 et 15, caractérisé par le fait que l'étage de filtre (33') contient un filtre passe-bas pour chaque sortie du premier dispositif de rotation vectorielle, qu'une valeur de consigne du courant réactif est ajoutée au signal de sortie du filtre passe-bas, (point de sommation 117') et que la somme est envoyée en tant qu'amplitude de consigne à un organe (5) de réglage de la tension comportant une sortie à tension triphasée, qu'une valeur de consigne du courant actif est ajoutée au signal de sortie du second filtre passe-bas (point de sommation 117'') et que la somme est envoyée au régulateur d'asservissement (119), et qu'on utilise comme intégrateur un oscillateur vectoriel (29, 120), dont le signal de sortie est envoyé d'une part à l'entrée des signaux angulaires du dispositif de rotation vectorielle (32a) et d'autre part, en tant que phase de consigne, à l'organe (5) de réglage de la tension et qu'un dispositif de symétrisation (122) et des moyens disposés parallèlement à ce dernier entre deux des trois sorties à tension triphasée et servant à réaliser l'alimentation d'un réseau monophasé à tension alternative, sont branchés en aval de l'organe de réglage de la tension (fig. 12 et 14).

17. Dispositif suivant la revendication 16, caractérisé par le fait que pour l'inversion du sens du flux d'énergie du courant actif, un inverseur (144, 146) peut être branché en amont du dispositif de rotation vectorielle à l'entrée des signaux vectoriels pour une composante, et en amont de l'entrée du régulateur (fig. 14).

18. Dispositif suivant la revendication 17, caractérisé par un transmetteur d'allure rapide (147) qui règle continûment à zéro la valeur de consigne du courant actif lors d'une inversion du sens du flux d'énergie débranche l'organe de réglage lors du dépassement d'une valeur minimale et délivre une instruction de commutation pour le branchement amont des circuits inverseurs et ensuite accroît continûment la valeur de consigne pour l'amener à la valeur de consigne associée à la direction inverse du flux d'énergie.

0106022

FIG 1

FIG 2

FIG 3

FIG 4

19

FIG 5

FIG 6

FIG 7

FIG 8

FIG 9

FIG 10

FIG 11

FIG 12

FIG 13

$$b \cdot \left( \frac{V_v}{1+ST} \cdot \underline{U}_u - \alpha \cdot \underline{U}_u \right)$$

$$\underline{U} = (U_\alpha, U_\beta)$$

FIG 14